(19) Europäisches Patentamt
European Patent Office
Office européen des brevets

(11) **EP 4 429 124 A1**

(12) **EUROPEAN PATENT APPLICATION**
published in accordance with Art. 153(4) EPC

(43) Date of publication:
**11.09.2024 Bulletin 2024/37**

(21) Application number: **23746035.7**

(22) Date of filing: **16.01.2023**

(51) International Patent Classification (IPC):
**H04B 7/06** (2006.01)    **H04B 7/0408** (2017.01)
**H04B 7/0426** (2017.01)

(52) Cooperative Patent Classification (CPC):
**H04B 7/0408; H04B 7/0426; H04B 7/06;**
**H04B 7/08; H04B 7/155**

(86) International application number:
**PCT/CN2023/072251**

(87) International publication number:
**WO 2023/143153 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022 CN 202210109121**

(71) Applicant: **Huawei Technologies Co., Ltd.
Shenzhen, Guangdong 518129 (CN)**

(72) Inventors:
• **LIU, Fengwei
Shenzhen, Guangdong 518129 (CN)**
• **YAN, Mao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **BEAM MANAGEMENT METHOD AND APPARATUS**

(57)     This application provides a beam management method and an apparatus. The method includes: A relay device receives a first signal from a network device, and forwards the first signal to a terminal device by using at least one first beam, where the first signal is for beam measurement; and the relay device performs transmission of a second signal with the terminal device by using at least one second beam, where the at least one second beam is determined based on a beam measurement result, and at least one beam in the at least one second beam is different from a beam in the at least one first beam. According to the beam management method and the apparatus provided in this application, higher transmission performance can be obtained by managing an access-side beam of the relay device.

FIG. 3

**Description**

This application claims priority to Chinese Patent Application No. 202210109121.4, filed with the China National Intellectual Property Administration on January 28, 2022 and entitled "BEAM MANAGEMENT METHOD AND APPARATUS", which is incorporated herein by reference in its entirety.

**TECHNICAL FIELD**

This application relates to the communication field, and more specifically, to a beam management method and an apparatus.

**BACKGROUND**

Usually, a network device and a terminal device directly communicate with each other. However, when the network device and the terminal device are far away from each other, and a path loss of signal transmission between the network device and the terminal device is high, a relay device may assist communication between the network device and the terminal device. For example, the relay device amplifies a received signal (including a signal from the network device and a signal from the terminal device) and then forwards an amplified signal. For example, the relay device has two antenna panels: one of which is for communication between the relay device and the network device, and the other is for communication between the relay device and the terminal device. Each antenna panel of the relay device may include a plurality of antennas. A beam may be formed on a single antenna panel (a beam for communication between the relay device and the network device is referred to as a backhaul side beam, and a beam for communication between the relay device and the terminal device is referred to as an access-side beam). After amplifying a received signal, the relay device may forward an amplified signal by using one or more beams.

In a current new radio (new radio, NR) system, only beam management in the case of direct communication between a network device and a terminal device is considered, but beam management performed on an access side of a relay device in the case of communication between the network device and the terminal device with the assistance of the relay device is not involved.

This application provides a beam management method and an apparatus, so that higher transmission performance can be obtained by managing an access-side beam of a relay device.

According to a first aspect, a beam management method is provided. The method may be performed by a relay device, or may be performed by a component (for example, a chip or a chip system) disposed in the relay device. This is not limited in this application. The method includes: A relay device receives a first signal from a network device, and forwards the first signal to a terminal device by using at least one first beam, where the first signal is for beam measurement; and the relay device performs transmission of a second signal with the terminal device by using at least one second beam, where the at least one second beam is determined based on a beam measurement result, and at least one beam in the at least one second beam is different from a beam in the at least one first beam.

It should be understood that the at least one second beam may be a transmit beam, or may be a receive beam. Therefore, the relay device performs transmission of the second signal with the terminal device by using the at least one second beam. To be specific, the relay device receives the second signal from the terminal device by using the at least one second beam, or the relay device forwards the second signal to the terminal device by using the at least one second beam.

For example, the at least one second beam is a transmit beam. To be specific, the relay device forwards a downlink signal (for example, a downlink reference signal or a downlink data signal) to the terminal device by using the at least one second beam.

For example, the at least one second beam is a receive beam. To be specific, the relay device receives an uplink signal (for example, an uplink reference signal or an uplink data signal) from the terminal device by using the at least one second beam.

In a possible implementation, the first signal is a reference signal, and the second signal is a reference signal. In this implementation, both the first signal and the second signal are for beam measurement.

For example, the first signal is a reference signal, the first signal is for measuring the at least one first beam, the second signal is a reference signal, and the second signal is for measuring the at least one second beam. A plurality of measurements may be performed until a beam available for transmission of a data signal is obtained.

In another possible implementation, the first signal is a reference signal, the second signal is a data signal. In this implementation, the first signal is for beam measurement, to obtain, through measurement, the at least one second beam for transmission of a data signal.

For example, the first signal is a reference signal, and the first signal is for measuring the at least one first beam.

Alternatively, the method includes: A relay device receives a third signal from a terminal device by using at least one first beam, and forwards the third signal to a network device, where the third signal is for beam measurement; and the relay device performs transmission of a fourth signal with the terminal device by using at least one second beam, where the at least one second beam is determined based on a beam measurement result, and at least one beam in the at least one second beam is different from a beam in the at least one first beam.

It should be understood that the at least one second beam may be a transmit beam, or may be a receive beam. Therefore, the relay device performs transmission of the fourth signal with the terminal device by using the at least one second beam. To be specific, the relay device receives the fourth signal from the terminal device by using the at least one second beam, or the relay device forwards the fourth signal to the terminal device by using the at least one second beam.

For example, the at least one second beam is a transmit beam. To be specific, the relay device forwards a downlink signal (for example, a downlink reference signal or a downlink data signal) to the terminal device by using the at least one second beam.

For example, the at least one second beam is a receive beam. To be specific, the relay device receives an uplink signal (for example, an uplink reference signal or an uplink data signal) from the terminal device by using the at least one second beam.

In a possible implementation, the third signal is a reference signal, and the fourth signal is a reference signal. In this implementation, both the third signal and the fourth signal are for beam measurement.

For example, the third signal is a reference signal, the third signal is for measuring the at least one first beam, the fourth signal is a reference signal, and the fourth signal is for measuring the at least one second beam. A plurality of measurements may be performed until a beam available for transmission of a data signal is obtained.

In another possible implementation, the third signal is a reference signal, the fourth signal is a data signal. In this implementation, the third signal is for beam measurement, to obtain, through measurement, the at least one second beam for transmission of a data signal.

For example, the third signal is a reference signal, and the third signal is for measuring the at least one first beam. Based on the foregoing solution, the relay device may obtain, through beam measurement, the at least one second beam for transmitting the second signal between the relay device and the terminal device. Transmission performance of the relay device using the at least one second beam may be better than transmission performance of the relay device using the at least one first beam.

With reference to the first aspect, in some implementations of the first aspect, the relay device sends first information to the network device, where the first information is for determining a beam set, and beams in the beam set are for communication between the relay device and the terminal device.

It should be understood that the beam set may be a set of beams that can be generated on a relay device side and that are for communication with the terminal device. The beam set may be reported by the relay device to the network device, or may be preconfigured on the network device. This is not limited in this application.

With reference to the first aspect, in some implementations of the first aspect, the relay device receives first configuration information from the network device, where the first configuration information includes information about the at least one first beam.

Based on the foregoing solution, the network device may configure, for the relay device based on the beam set reported by the relay device, a beam for measurement, for example, configure the at least one first beam, where the at least one first beam is a part of beams in the beam set.

With reference to the first aspect, in some implementations of the first aspect, the first information includes at least one of the following: quantity information of beams or beam sets, quasi co-location information of the beams or the beam sets, coverage range information of the beams or the beam sets, a relative relationship between the beams or the beam sets, antenna array information, and weight generation information.

Based on the foregoing solution, if the first information includes the relative relationship between the beams (or the beam sets), compared with a solution in which the first information includes specific information of each beam (or beam set), signaling overheads of reporting the first information can be reduced.

With reference to the first aspect, in some implementations of the first aspect, the first configuration information includes at least one of the following:

an index of a beam or a beam set, an oversampling parameter, an offset, beam weight generation information, usage time corresponding to the beam or the beam set, and a scanning periodicity corresponding to the beam or the beam set.

Based on the foregoing solution, the first configuration information may include specific information of a used beam (or beam set), for example, usage time or a scanning periodicity corresponding to the beam (or beam set), so that measurement of the at least one first beam can be performed more orderly.

With reference to the first aspect, in some implementations of the first aspect, the relay device receives second configuration information from the network device, where the second configuration information is for forwarding the first signal or the third signal, and the second configuration information includes at least one of the following: an amplification multiple of the first signal or the third signal and a transmit power of the first signal or the third signal.

Based on the foregoing solution, the relay device may forward the first signal or the third signal based on the amplification multiple and the transmit power that are configured in the second configuration information, so that measurement of the at least one first beam is more accurate.

With reference to the first aspect, in some implementations of the first aspect, the beams in the beam set include a plurality of types of beams, where different types of beams are for forwarding different channels or services.

Based on the foregoing solution, the beams in the beam set are classified, so that different types of beams serve different channels or services, thereby meeting different service requirements, and further improving performance of signal transmission between the relay device and the terminal device.

With reference to the first aspect, in some implementations of the first aspect, the relay device obtains a beam measurement result from the network device, and determines the at least one second beam based on the measurement result.

For example, the relay device receives a measurement result of the at least one first beam from the network device, and determines the at least one second beam based on the measurement result of the at least one first beam. The measurement result of the at least one first beam may be obtained by the terminal device by measuring the at least one first beam based on the first signal, or the measurement result of the at least one first beam may be obtained by the network device by measuring the at least one first beam based on the third signal.

Alternatively, the relay device receives a measurement result of the at least one first beam from the terminal device, and determines the at least one second beam based on the measurement result of the at least one first beam. The measurement result of the at least one first beam may be obtained by the terminal device by measuring the at least one first beam based on the first signal.

In a possible implementation, the relay device performs interpolation or oversampling on the at least one first beam based on the measurement result to obtain the at least one second beam.

Based on the foregoing solution, the relay device may perform interpolation or oversampling on the at least one first beam based on the measurement result of the first beam, to obtain the at least one second beam with better transmission performance, so that implementation on the relay device side is more autonomous and more flexible.

With reference to the first aspect, in some implementations of the first aspect, the relay device receives second information from the network device, where the second information includes information about the at least one second beam determined by the network device based on the beam measurement result.

Based on the foregoing solution, the relay device determines, based on an indication of the network device, the at least one second beam with better transmission performance, and the relay device does not need to perform a complex operation. Therefore, implementation complexity of the relay device can be reduced in this solution.

According to a second aspect, a beam management method is provided. The method may be performed by a network device, or may be performed by a component (for example, a chip or a chip system) disposed in the network device. This is not limited in this application. The method includes: A network device sends a first signal to a relay device, where the first signal is for beam measurement; and the network device receives a beam measurement result from the relay device, and determines at least one second beam based on the measurement result, where the at least one second beam is for transmitting a second signal between the relay device and a terminal device, at least one beam in the at least one second beam is different from a beam in at least one first beam, and the at least one first beam is used by the relay device to forward the first signal to the terminal device.

It should be understood that the at least one second beam may be a transmit beam, or may be a receive beam. Therefore, the relay device performs transmission of the second signal with the terminal device by using the at least one second beam. To be specific, the relay device receives the second signal from the terminal device by using the at least one second beam, or the relay device forwards the second signal to the terminal device by using the at least one second beam.

For example, the at least one second beam is a transmit beam. To be specific, the relay device forwards a downlink signal (for example, a downlink reference signal or a downlink data signal) to the terminal device by using the at least one second beam.

For example, the at least one second beam is a receive beam. To be specific, the relay device receives an uplink signal (for example, an uplink reference signal or an uplink data signal) from the terminal device by using the at least one second beam.

It should be further understood that the beam measurement result received by the network device is a beam measurement result sent to the network device by the terminal device with assistance of the relay device, and the beam measurement result is obtained by the terminal device by measuring the first signal.

For example, the beam measurement result may be obtained by the terminal device by measuring the at least one first beam based on the first signal.

In a possible implementation, the first signal is a reference signal, and the second signal is a reference signal. In this implementation, both the first signal and the second signal are for beam measurement.

For example, the first signal is a reference signal, the first signal is for measuring the at least one first beam, the second signal is a reference signal, and the second signal is for measuring the at least one second beam. A plurality of measurements may be performed until a beam available for transmission of a data signal is obtained.

In another possible implementation, the first signal is a reference signal, the second signal is a data signal. In this implementation, the first signal is for beam measurement, to obtain, through measurement, the at least one second beam for transmission of a data signal.

For example, the first signal is a reference signal, and the first signal is for measuring the at least one first beam.

Alternatively, the method includes: A network device receives a third signal from a relay device, where the third signal is for beam measurement; and the network device determines a beam measurement result, and determines at least one second beam based on the measurement result, where the at least one second beam is for transmitting a fourth signal between the relay device and a terminal device, at least one beam in the at least one second beam is different from a beam in at least one first beam, and the at least one first beam is used by the relay device to receive the third signal from the terminal device.

It should be understood that the at least one second beam may be a transmit beam, or may be a receive beam. Therefore, the relay device performs transmission of the fourth signal with the terminal device by using the at least one second beam. To be specific, the relay device receives the fourth signal from the terminal device by using the at least one second beam, or the relay device forwards the fourth signal to the terminal device by using the at least one second beam.

For example, the at least one second beam is a transmit beam. To be specific, the relay device forwards a downlink signal (for example, a downlink reference signal or a downlink data signal) to the terminal device by using the at least one second beam.

For example, the at least one second beam is a receive beam. To be specific, the relay device receives an uplink signal (for example, an uplink reference signal or an uplink data signal) from the terminal device by using the at least one second beam.

It should be understood that the beam measurement result determined by the network device may be obtained by the network device by measuring the third signal.

For example, the beam measurement result may be obtained by the network device by measuring the at least one first beam based on the third signal.

In a possible implementation, the third signal is a reference signal, and the fourth signal is a reference signal. In this implementation, both the third signal and the fourth signal are for beam measurement.

For example, the third signal is a reference signal, the third signal is for measuring the at least one first beam, the fourth signal is a reference signal, and the fourth signal is for measuring the at least one second beam. A plurality of measurements may be performed until a beam available for transmission of a data signal is obtained.

In another possible implementation, the third signal is a reference signal, the fourth signal is a data signal. In this implementation, the third signal is for beam measurement, to obtain, through measurement, the at least one second beam for transmission of a data signal.

For example, the third signal is a reference signal, and the third signal is for measuring the at least one first beam.

Based on the foregoing solution, the network device may obtain, through beam measurement, the at least one second beam for transmitting the second signal between the relay device and the terminal device. Transmission performance of the relay device using the at least one second beam may be better than transmission performance of the relay device using the at least one first beam.

With reference to the second aspect, in some implementations of the second aspect, the network device receives first information from the relay device, where the first information is for determining a beam set, and beams in the beam set are for communication between the relay device and the terminal device.

It should be understood that the beam set may be a set of beams that can be generated on a relay device side and that are for communication with the terminal device. The beam set may be reported by the relay device to the network device, or may be preconfigured on the network device. This is not limited in this application.

With reference to the second aspect, in some implementations of the second aspect, the network device sends first configuration information to the relay device, where the first configuration information includes information about the at least one first beam.

Based on the foregoing solution, the network device may configure, based on the beam set reported by the relay device, a beam for measurement, for example, configure the at least one first beam, where the at least one first beam is a part of beams in the beam set.

With reference to the second aspect, in some implementations of the second aspect, the first information includes at least one of the following: quantity information of beams/beam sets, quasi co-location information of the beams/the beam sets, coverage range information of the beams/the beam sets, a relative relationship between the beams or the beam sets, antenna array information, and weight generation information.

Based on the foregoing solution, if the first information includes the relative relationship between the beams (or the beam sets), compared with a solution in which the first information includes specific information of each beam (or beam set), signaling overheads of reporting the first information can be reduced.

With reference to the second aspect, in some implementations of the second aspect, the first configuration information includes at least one of the following:

an index of a beam or a beam set, an oversampling parameter, an offset, beam weight generation information, usage time corresponding to the beam or the beam set, and a scanning periodicity corresponding to the beam or the beam set.

Based on the foregoing solution, the first configuration information may include specific information of a used beam (or beam set), for example, usage time or a scanning periodicity corresponding to the beam (or beam set), so that measurement of the at least one first beam can be performed more orderly.

With reference to the second aspect, in some implementations of the second aspect, the network device sends second configuration information to the relay device, where the second configuration information is for forwarding the first signal or the third signal, and the second configuration information includes at least one of the following: an amplification multiple of the first signal or the third signal and a transmit power of the first signal or the third signal.

Based on the foregoing solution, the network device may configure the amplification multiple and the transmit power that are used by the relay device to forward the first signal or the third signal, so that measurement of the at least one first beam is more accurate.

With reference to the second aspect, in some implementations of the second aspect, the beams in the beam set include a plurality of types of beams, where different types of beams are for forwarding different channels or services.

Based on the foregoing solution, the beams in the beam set are classified, so that different types of beams serve different channels or services, thereby further improving performance of signal transmission between the relay device and the terminal device.

With reference to the second aspect, in some implementations of the second aspect, the network device sends second information to the relay device, where the second information includes information about the at least one second beam determined by the network device based on the beam measurement result.

In a possible implementation, the network device performs interpolation or oversampling on the at least one first beam based on the measurement result to obtain the at least one second beam.

Based on the foregoing solution, the network device may perform interpolation or oversampling on the at least one first beam based on the measurement result of the first beam, to obtain the at least one second beam with better transmission performance, and indicate the at least one second beam to the relay device, thereby reducing implementation complexity of the relay device.

According to a third aspect, a communication apparatus is provided. The apparatus may be a relay device, or may be a component (for example, a chip or a chip system) disposed in the relay device. This is not limited in this application. The apparatus includes a transceiver unit. The transceiver unit is configured to: receive a first signal from a network device, and forward the first signal to a terminal device by using at least one first beam, where the first signal is for beam measurement. The transceiver unit performs transmission of a second signal with the terminal device by using at least one second beam, where the at least one second beam is determined based on a beam measurement result, and at least one beam in the at least one second beam is different from a beam in the at least one first beam.

Alternatively, the transceiver unit is configured to receive a third signal from a terminal device by using at least one first beam, and forward the third signal to a network device, where the third signal is for beam measurement. The transceiver unit performs transmission of a fourth signal with the terminal device by using at least one second beam, where the at least one second beam is determined based on a beam measurement result, and at least one beam in the at least one second beam is different from a beam in the at least one first beam.

With reference to the third aspect, in some implementations of the third aspect, the transceiver unit is further configured to send first information to the network device, where the first information is for determining a beam set, and beams in the beam set are for communication between the relay device and the terminal device.

With reference to the third aspect, in some implementations of the third aspect, the transceiver unit is further configured to receive first configuration information from the network device, where the first configuration information includes information about the at least one first beam.

With reference to the third aspect, in some implementations of the third aspect, the first information includes at least one of the following: quantity information of beams or beam sets, quasi co-location information of the beams or the beam sets, coverage range information of the beams or the beam sets, a relative relationship between the beams or the beam sets, antenna array information, and weight generation information.

With reference to the third aspect, in some implementations of the third aspect, the first configuration information includes at least one of the following:

an index of a beam or a beam set, an oversampling parameter, an offset, beam weight generation information, usage time corresponding to the beam or the beam set, and a scanning periodicity corresponding to the beam or the beam set.

With reference to the third aspect, in some implementations of the third aspect, the transceiver unit is further configured to receive second configuration information from the network device, where the second configuration information is for forwarding the first signal or the third signal, and the second configuration information includes at least one of the following: an amplification multiple of the first signal or the third signal and a transmit power of the first signal or the third signal.

With reference to the third aspect, in some implementations of the third aspect, the beams in the beam set include a plurality of types of beams, where different types of beams are for forwarding different channels or services.

With reference to the third aspect, in some implementations of the third aspect, the transceiver unit is further configured to obtain a beam measurement result from the network device. The processing unit is further configured to determine the at least one second beam based on the measurement result.

With reference to the third aspect, in some implementations of the third aspect, the transceiver unit is further configured to receive second information from the network device, where the second information includes information about the at least one second beam determined by the network device based on the beam measurement result.

According to a fourth aspect, a communication apparatus is provided. The apparatus may be a network device, or may be a component (for example, a chip or a chip system) disposed in the network device. This is not limited in this application. The apparatus includes a transceiver unit and a processing unit. The transceiver unit is configured to send a first signal to a relay device, where the first signal is for beam measurement. The transceiver unit is configured to: receive a beam measurement result from the relay device; and determine at least one second beam based on the measurement result, where the at least one second beam is for transmitting a second signal between the relay device and a terminal device, at least one beam in the at least one second beam is different from a beam in at least one first beam, and the at least one first beam is used by the relay device to forward the first signal to the terminal device.

The transceiver unit is configured to receive a third signal from a relay device, where the third signal is for beam measurement. The processing unit is configured to: determine a beam measurement result; and determine at least one second beam based on the measurement result, where the at least one second beam is for transmitting a fourth signal between the relay device and a terminal device, at least one beam in the at least one second beam is different from a beam in at least one first beam, and the at least one first beam is used by the relay device to receive the third signal from the terminal device.

With reference to the fourth aspect, in some implementations of the fourth aspect, the transceiver unit is further configured to receive first information from the relay device, where the first information is for determining a beam set, and beams in the beam set are for communication between the relay device and the terminal device.

With reference to the fourth aspect, in some implementations of the fourth aspect, the transceiver unit is further configured to send first configuration information to the relay device, where the first configuration information includes information about the at least one first beam.

With reference to the fourth aspect, in some implementations of the fourth aspect, the first information includes at least one of the following: quantity information of beams/beam sets, quasi co-location information of the beams/the beam sets, coverage range information of the beams/the beam sets, a relative relationship between the beams or the beam sets, antenna array information, and weight generation information.

With reference to the fourth aspect, in some implementations of the fourth aspect, the first configuration information includes at least one of the following:

an index of a beam or a beam set, an oversampling parameter, an offset, beam weight generation information, usage time corresponding to the beam or the beam set, and a scanning periodicity corresponding to the beam or the beam set.

With reference to the fourth aspect, in some implementations of the fourth aspect, the transceiver unit is further configured to send second configuration information to the relay device, where the second configuration information is for forwarding the first signal or the third signal, and the second configuration information includes at least one of the following: an amplification multiple of the first signal or the third signal and a transmit power of the first signal or the third signal.

With reference to the fourth aspect, in some implementations of the fourth aspect, the beams in the beam set include a plurality of types of beams, where different types of beams are for forwarding different channels or services.

With reference to the fourth aspect, in some implementations of the fourth aspect, the transceiver unit is further configured to send second information to the relay device, where the second information includes information about the at least one second beam determined by the processing unit based on the beam measurement result.

In a possible implementation, the processing unit is further configured to perform interpolation or oversampling on the at least one first beam based on the measurement result to obtain the at least one second beam.

According to a fifth aspect, a communication apparatus is provided. The apparatus includes a processor. The processor is coupled to a memory, and may be configured to execute instructions in the memory, to implement the method according to any one of the first aspect or the possible implementations of the first aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip disposed in a relay device. When the apparatus is the chip disposed in the relay device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver is a transceiver circuit. Optionally, the input/output interface is an input/output circuit.

Optionally, the transceiver includes a transmitter and/or a receiver.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a sixth aspect, a communication apparatus is provided. The apparatus includes a processor. The processor is coupled to a memory, and may be configured to execute instructions in the memory, to implement the method according to any one of the second aspect or the possible implementations of the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip disposed in a network device. When the apparatus is the chip disposed in the network device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver is a transceiver circuit. Optionally, the input/output interface is an input/output circuit.

Optionally, the transceiver includes a transmitter and/or a receiver.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a communication apparatus is provided. The apparatus includes a logic circuit, where the logic circuit is coupled to an input/output interface, and configured to transmit data through the input/output interface, to perform the method according to any one of the first aspect, the second aspect, or the possible implementation of the first aspect or the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect, the second aspect, or the possible implementation of the first aspect or the second aspect.

According to a ninth aspect, a computer program product is provided. The computer program product includes a computer program (which may also be referred to as code or instructions). When the computer program is run, a computer is enabled to perform the method according to any one of the first aspect, the second aspect, or the possible implementation of the first aspect or the second aspect.

According to a tenth aspect, a communication system is provided, where the communication system includes a network device and a relay device. The network device is configured to implement the method according to any one of the second aspect or the possible implementations of the second aspect, and the relay device is configured to implement the method according to any one of the first aspect or the possible implementations of the first aspect.

For specific implementations of the third aspect to the tenth aspect and beneficial effects brought by different implementations, refer to descriptions of specific implementations and beneficial effects of the first aspect and the second aspect. Details are not described herein again.

**BRIEF DESCRIPTION OF DRAWINGS**

FIG. 1 is a schematic of a network architecture according to an embodiment of this application;
FIG. 2 is a schematic of another network architecture according to an embodiment of this application;

FIG. 3 is a flowchart of a method for managing an access-side beam of a relay device according to an embodiment of this application;

FIG. 4 is a schematic of a two-dimensional coverage range of a beam or a beam set according to an embodiment of this application;

FIG. 5 is a schematic of adjacent coverage ranges of different beams or beam sets according to an embodiment of this application;

FIG. 6 is a schematic of association between a beam and a signal according to an embodiment of this application;

FIG. 7 is a schematic of intersecting coverage ranges of different beams or beam sets according to an embodiment of this application;

FIG. 8 is a schematic of a relative relationship between beams or beam sets according to an embodiment of this application;

FIG. 9 is a schematic of setting a beam index according to an embodiment of this application;

FIG. 10 is a schematic of normalized gains of different beams at different angles according to an embodiment of this application;

FIG. 11 is a schematic of performing beam interpolation by a network device according to an embodiment of this application;

FIG. 12 is a flowchart of another method for managing an access-side beam of a relay device according to an embodiment of this application;

FIG. 13 is a schematic of a partial structure of a relay device according to an embodiment of this application;

FIG. 14 is a schematic of a partial structure of a network device according to an embodiment of this application;

FIG. 15 is a schematic of a communication apparatus according to an embodiment of this application;

FIG. 16 is a schematic of another communication apparatus according to an embodiment of this application;

FIG. 17 is a schematic of a structure of a communication apparatus according to an embodiment of this application;

FIG. 18 is a schematic of a structure of another communication apparatus according to an embodiment of this application; and

FIG. 19 is a schematic of a structure of still another communication apparatus according to an embodiment of this application.

## DESCRIPTION OF EMBODIMENTS

The following describes technical solutions of this application with reference to accompanying drawings.

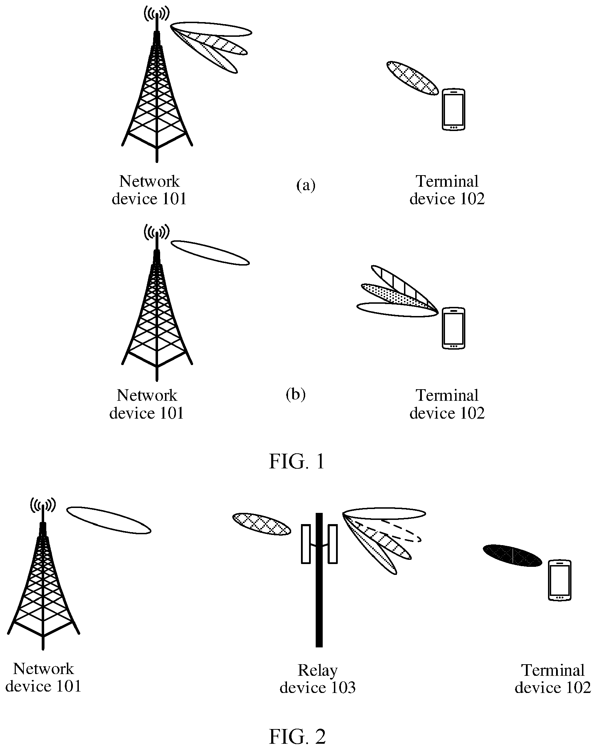

FIG. 1 is a schematic of a network architecture according to an embodiment of this application.

In a future wireless communication system, a beamforming technology is for limiting energy for transmitting signals to a specific beam direction, to improve signal sending and reception efficiency. However, in a communication network using a beamforming technology, a transmit beam/receive beam first needs to match a radio channel, so that the receive beam obtains a signal with good quality from the transmit beam, to complete matching between the transmit beam/receive beam and the channel. The matching between the transmit beam/receive beam and the channel is usually completed through beam scanning.

FIG. 1(a) shows a transmit beam scanning process of a network device 101. During transmit beam scanning of the network device 101, a terminal device 102 end uses a fixed receive beam, and the network device separately sends a reference signal by using a plurality of transmit beams for measurement by the terminal device, to complete matching between a transmit beam of the network device and a radio channel. During receive beam scanning of the network device 101, the terminal device 102 end uses a fixed transmit beam, and the network device receives, by using a plurality of receive beams, a reference signal sent by the terminal device, and performs measurement, to complete matching between a receive beam of the network device and a radio channel.

FIG. 1(b) shows a receive beam scanning process of the terminal device 102. During receive beam scanning of the terminal device 102, a network device 101 end uses a fixed transmit beam, and the terminal device receives, by using a plurality of receive beams, a reference signal sent by the network device, and performs measurement, to complete matching between a receive beam of the terminal device and a radio channel. During transmit beam scanning of the terminal device 102, the network device 101 end uses a fixed receive beam, and the terminal device sends a reference signal to the network device by using a plurality of transmit beams for measurement by the network device, to complete matching between a transmit beam of the terminal device and a radio channel.

When a distance between the network device 101 and the terminal device 102 is long, a relay device 103 is added to the communication system, so that the relay device 103 assists in communication between the network device 101 and the terminal device 102. The communication system in which the relay device is added is shown in FIG. 2. Usually, there are two antenna panels (or two antennas) on a relay device side. One antenna panel (or one antenna) is used by the relay device 103 to communicate with the network device 101 (the antenna panel is referred to as a backhaul-side antenna panel, or the antenna is referred to as a backhaul-side antenna), and the other antenna panel (or the other antenna) is used by the relay device 103 to communicate with the terminal device 102 (the antenna panel is referred to as an access-side antenna panel, or the antenna is referred to as an access-side antenna). Each antenna panel of the relay device may include a plurality of (including two or more) antennas, and a beam may be formed on a single antenna panel. As shown in FIG. 2, after amplifying a signal from the network device 101 by using a backhaul-side beam of the relay device 103, the relay device forwards an amplified signal to the terminal device by using an access-side beam. When forwarding the signal by using the access-side beam of the relay device 103, the relay device needs to align the beam with the terminal device 102, to obtain good transmission performance.

It should be understood that the access side refers to a link oriented to a child node in a process in which the relay device assists signal transmission, for example, a link between the relay device and the terminal device. The access-side beam is a beam for communication between the relay device and the terminal device, an access-side receive beam is a beam used by the relay device to receive a signal from the terminal device, and an access-side transmit beam is a beam used when the relay device sends a signal to the terminal device. The backhaul side refers to a link oriented to a parent node in a process in which the relay device assists signal transmission, for example, a link between the relay device and a network. The backhaul-side beam is a beam for communication between the relay device and the network device, a backhaul-side receive beam is a beam used by the relay device to receive a signal from the network device, and a backhaul-side transmit beam is a beam used when the relay device sends a signal to the network device.

Currently, beam management, that is, management of a communication beam between a network device and a terminal device, in the network architecture shown in FIG. 1 is involved in communication, and beam management on an access side of the relay device in the network architecture shown in FIG. 2 is not involved.

In a possible beam management manner, the network device sends M downlink reference signals, and the relay device sequentially forwards, after receiving the M downlink reference signals by using the backhaul-side receive beam of the relay device, the M downlink reference signals by using M access-side transmit beams. Alternatively, the terminal device sends M uplink reference signals, and the relay device forwards, after receiving the M uplink reference signals by using M access-side receive beams, the M uplink reference signals to the network device by using the backhaul-side transmit beam.

It should be understood that the backhaul-side receive beam and the backhaul-side transmit beam of the relay device may be managed in a manner similar to that of an existing transmit beam and an existing receive beam of the terminal device.

The foregoing manner is simple, but overheads increase as a value of M increases. In addition, when resources (including a time domain resource and a frequency domain resource) are limited, the M beams cannot be traversed during reference signal forwarding, reducing forwarding performance of the relay device.

Therefore, embodiments of this application provide a method for managing an access-side beam of a relay device and a device, so that higher transmission performance can be obtained by managing the access-side beam of the relay device.

The technical solutions in embodiments of this application may be applied to various communication systems, for example, a long term evolution (long term evolution, LTE) system, a long term evolution advanced (LTE advanced, LTE-A) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th Generation, 5G) system, a future evolved communication system (for example, a 6G mobile communication system), vehicle-to-X (vehicle-to-X V2X), long term evolution-vehicle (long term evolution-vehicle, LTE-V), an internet of vehicles, machine type communication (machine type communication, MTC), an internet of things (Internet of things, IoT), long-term evolution-machine (long term evolution-machine, LTE-M), machine to machine (machine to machine, M2M), and the like, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The terminal device may be a wireless terminal device that can receive scheduling and indication information of the network device. The terminal device may be a device that provides a user with voice and/or data connectivity, a handheld device with a wireless connection function, or another processing device connected to a wireless modem.

The terminal device in embodiments of this application may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing a user with voice/data connectivity), for example, a handheld device or a vehicle-mounted device having a wireless connection function. The terminal in embodiments of this application may be a mobile phone (mobile phone), a tablet computer (pad), a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal in an internet of vehicles (for example, a vehicle-mounted device, a vehicle device, a vehicle-mounted module, a vehicle), a wireless terminal in self-driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G system such as an NR system, may be one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated by the PHY layer of the DU into PHY layer information, or is converted from PHY layer information. Therefore, in this architecture, higher layer signaling (for example, RRC layer signaling) may also be considered to be sent by the DU, or sent by the DU+AAU. It may be understood that a network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The relay device in embodiments of this application has a signal forwarding function, and may amplify a signal, for example, a repeater. In addition, alternatively, the relay device may relocate a carrier frequency of a signal, may demodulate a signal, re-modulate the signal and then forward the signal, or may reduce noise of a signal and then forward the signal. Therefore, the relay may be in any one of the following forms: amplification forwarding, demodulation forwarding, frequency shift forwarding, and noise reduction forwarding. In addition, the relay has another form, which is referred to as a reflector or a reflecting surface, or may have other possible names: an intelligent reflecting surface (intelligent reflecting surface), a reflector array, an intelligent reflecting array (intelligent reflecting array), a reflector, an intelligent reflector, a backscatter device (backscatter device), a passive device (passive device), a semi-active device (semi-passive device), and an ambient signal device (ambient signal device). The relay device may also be considered as a terminal device in a special form. If a capability of controlling the relay device by a network side is considered, the relay device may be classified into a non-intelligent relay device and an intelligent relay device, or may be classified into an uncontrolled repeater (uncontrolled repeater) and a network-controlled repeater (network controlled repeater, Net-

ConRepeater, or NCR). The network device may control the relay device to perform more performance enhancement functions, for example, at least one of relaying transmit power control, relaying amplification gain control, relaying beam scanning control, relaying precoding control, connectivity control, and uplink/downlink forwarding control.

The relay device logically includes a plurality of parts, including one or more of a signal transceiver unit, a controller, a signal amplifier, and the like, and is configured to implement communication and signaling exchange with the network device and the terminal device, signal amplification, and the like. A controller of the relay device is also referred to as a mobile terminal (mobile terminal, MT), a terminal (Terminal), or a fixed terminal (fixed terminal, FT), and block diagrams of other parts may form a radio unit (radio unit, RU) (which may also be referred to as a distributed unit (distributed unit, DU), a distributed radio unit (distributed radio unit, DRU), or the like).

For example, during downlink communication, one signal transceiver unit is configured to receive a signal of the network device, and another signal transceiver unit is configured to forward an amplified received signal to the terminal device. In addition, the controller may further communicate with the network device or the terminal device via the signal transceiver unit. For example, the controller communicates with the network device via the signal transceiver unit, and is configured to establish a communication link and implement beam alignment between the relay device and the network device, and may be further configured to receive configuration/indication information of the network device, so that the network device controls working time, a working status, a working mode, or the like of the relay device. Alternatively, the relay device is configured to receive a trigger signal of the terminal device, so that the relay device enters a corresponding working mode as required. For another example, the controller may further determine a working status (for example, an amplification multiple or a phase) of a signal amplifier based on indication information of the network device or measurement information of the controller. It should be understood that a quantity of each type of unit may be one or more. For example, there are a plurality of signal amplifiers, which separately correspond to different polarization directions or relay radio frequency channels.

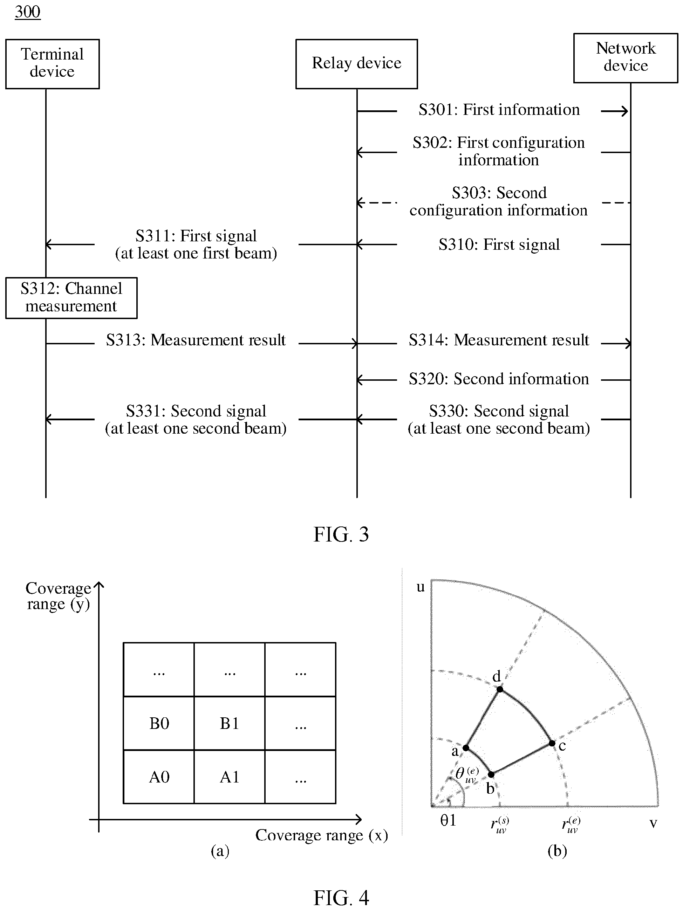

FIG. 3 is a flowchart of a method for managing an access-side beam of a relay device according to an embodiment of this application. The method 300 shown in FIG. 3 includes the following steps.

S310 and S311: A network device sends a first signal to a terminal device, and a relay device assists in sending the first signal. Correspondingly, the relay device receives the first signal, and forwards the first signal to the terminal device by using at least one first beam, where the first signal is for beam measurement. Correspondingly, the terminal device receives the first signal.

For example, in a downlink signal-based beam management process, the first beam may be a first access-side transmit beam, the first signal may be a first downlink signal, and the first signal is for measuring the at least one first beam (for example, the first access-side transmit beam).

It should be understood that before sending the first downlink signal, the network device sends measurement configuration information of the first downlink signal to the relay device and the terminal device.

It should be further understood that S310 and S311 may be performed simultaneously. To be specific, the relay device may receive, amplify, and forward a signal at the same time (in other words, processes of receiving, amplifying, and forwarding a signal by the relay device almost occur at the same time, and the following similar descriptions are understood the same as content described herein). A quantity of first beams for forwarding the first downlink signal may be less than a quantity of beams that can be generated by the relay device. For example, if the relay device can generate M beams, the relay device selects a part of beams (for example, N beams) from the M beams to forward the first downlink signal, where M and N are integers greater than or equal to 1, and N is less than or equal to M. For another example, if the relay device can generate M beams, the network device indicates the relay device to select a part of beams (for example, N beams) from the M beams to forward the first downlink signal, where M and N are integers greater than or equal to 1, and N is less than or equal to M.

Measurement of an access-side transmit beam may be understood as scanning of the access-side transmit beam. To be specific, the first downlink signal is sent by using different access-side transmit beams. The terminal device receives the first downlink signal by using a fixed receive beam, and measures the first downlink signal. Alternatively, measurement of an access-side transmit beam may be understood as scanning of a receive beam of the terminal device. To be specific, at least one first downlink signal is sent by using a same access-side transmit beam. The terminal device receives the first downlink signal by using different receive beams, and measures the first downlink signal. Alternatively, measurement of an access-side transmit beam may be understood as alignment between the access-side transmit beam and a receive beam of the terminal device. To be specific, the first downlink signal is sent and received for a plurality of times, to improve a degree of alignment between the access-side beam of the relay device and the receive beam of the terminal device, and improve signal transmission performance.

In this application, "sending" on an access side or a backhaul side of the relay device may be understood as "forwarding". To be specific, the relay device forwards a received signal.

The first signal in this embodiment of this application may be a downlink reference signal, and is for beam management, channel estimation, auxiliary signal demodulation or detection, or the like. The reference signal may include a demodulation reference signal (demodulation reference signal, DMRS), a channel state information reference signal (channel state information reference signal, CSI-RS), a phase tracking reference signal (phase tracking reference signal, PTRS), a synchronization signal/physical broadcast channel block (synchronization signal/physical broadcast channel block, SSB), a tracking reference signal (tracking reference signal, TRS), a channel sounding reference signal (sounding reference signal, SRS), or the like. This is not limited in this application.

It should be understood that, in the downlink signal-based beam management process, before receiving the first downlink signal, the terminal device obtains (or receives) the measurement configuration information of the first downlink signal. The measurement configuration information mainly includes two parts: resource configuration information and reporting configuration information. The terminal device receives the first downlink signal based on the resource configuration information.

For example, the measurement configuration information may be carried in RRC signaling. The resource configuration information is information related to a measurement resource (a resource on which a reference signal is located), and is configured by using a three-level structure of resource configuration (resourceConfig)-resource set (resourceSet)-resource (resource) in a protocol. The network device may configure one or more resource configurations for the terminal device. Each resource configuration includes one or more resource sets, and each resource set may include one or more resources. Each resource configuration/resource set/resource includes an index of the resource configuration/resource set/resource (for example, each resource configuration includes an index of the resource configuration, each resource set includes an index of the resource set, and each resource includes an index of the resource). In addition, some other parameters are further included, for example, a resource periodicity and a signal class corresponding to the resource. The reporting configuration information is information related to reporting of a measurement result, and is configured through reporting configuration (ReportConfig) in a protocol. The network device may configure one or more reporting configurations for the terminal device. Each reporting configuration includes reporting-related information such as a reporting indicator, reporting time, a reporting periodicity, and a reporting format. In addition, the reporting configuration further includes a resource configuration index, and the index associates the reporting configuration with the resource configuration, so that the reporting configuration may indicate a resource configuration based on which a reporting result is obtained through measurement.

The method 300 further includes the following step.

S301: The relay device sends first information to the network device, where the first information is for determining a beam set, and beams in the beam set are for communication between the terminal device and the relay device. Correspondingly, the network device receives the first information.

Optionally, the first information includes at least one of the following:

> quantity information of beams or beam sets;
> quasi co-location information of the beams or the beam sets;
> coverage range information of the beams or the beam sets;
> a relative relationship between the beams or the beam sets;
> a correspondence between a beam index and a weight;
> a correspondence between a beam index and a beam;
> antenna array information; and
> weight generation information.

It should be understood that the beam set that can be determined based on the first information includes the at least one first beam in S310 and S311, and the beam set may include all beams that can be generated by a relay device end, or may be a part of all beams that can be generated by a relay device end.

In a possible implementation, the first information includes beam/beam set quantity information of access-side beams. Herein, the quantity information may be a maximum quantity of beams/beam sets on an access side of the relay device, or may be a quantity of candidate beams/candidate beam sets on an access side of the relay device. The candidate beams/candidate beam sets belong to a part of all beams/beam sets on the access side of the relay device.

For example, the first information includes a quantity of sets in the beam sets (the beam sets that may be determined based on the first information, for example, {A, B, C, ...}), where A, B, or C is an index of a beam set. Alternatively, the first information includes a quantity of beams. To be specific, the first information includes a quantity of sets in the beam sets {A, B, C, ...}, a quantity of beams in the beam set A ({ a0, a1, a2, ...}), a quantity of beams in the beam set B ({b0, b1, b2, ...}), and a quantity of beams in the beam set C ({c0, c1, c2, ...}), where a0, a1, a2, b0, b1, b2, c0, c1, and c2 are beam indexes.

It should be understood that one beam set (the beam set may also be referred to as a beam set) includes at least one beam. The quantity of beam sets or beams may be any value in {1, 2, 4, 6, 8, 10, 16, 24, 32}. It is assumed that the quantity of beam sets or beams is not greater than K, where K may be any value in {1, 2, 4, 6, 8, 10, 16, 24, 32}.

It should be further understood that the beam set that can be determined based on the first information may include one or more beam sets. For example, the beam set determined based on the first information is {A, B, C, ...},

where a plurality of beam sets are included, for example, the beam set A, the beam set B, and the beam set C.

In a possible implementation, the first information includes quasi co-location (quasi co-location, QCL) information of beams/beam sets of an access-side beam.

A QCL relationship indicates that a plurality of resources have one or more same or similar communication features. For the plurality of resources that have the QCL relationship, a same or similar communication configuration may be used. Specifically, signals corresponding to antenna ports that have a QCL relationship have a same parameter; a parameter (which may also be referred to as a QCL parameter) of an antenna port may be for determining a parameter of another antenna port that has a QCL relationship with the antenna port; two antenna ports have a same parameter; or a parameter difference between two antenna ports is less than a threshold. The parameter may include one or more of the following: a delay spread (delay spread), a Doppler spread (doppler spread), a Doppler shift (doppler shift), an average delay (average delay), an average gain, and spatial receive parameters (spatial rx parameters). The spatial receive parameters may include one or more of the following: an angle of arrival (angle of arrival, AOA), an average AOA, an AOA spread, an angle of departure (angle of departure, AOD), an average AOD, an AOD spread, a receive antenna spatial correlation parameter, a transmit antenna spatial correlation parameter, a transmit beam, a receive beam, and a resource identifier.

In this application, "beam" is an abstract concept, may correspond to an instantaneous or statistical channel characteristic during signal transmission, for example, a delay spread (delay spread), a Doppler spread (doppler spread), a Doppler shift (doppler shift), an average delay (average delay), an average gain, spatial receive parameters (spatial Rx parameters), and spatial transmit parameters (spatial Tx parameters). The spatial receive parameters or the spatial transmit parameters may include one or more of the following: an angle of arrival (angle of arrival, AOA), an average AOA, an AOA spread, an angle of departure (angle of departure, AOD for short), an average angle of departure AOD, an AOD spread, a receive antenna spatial correlation parameter, a transmit antenna spatial correlation parameter, a transmit beam, a receive beam, and a resource identifier. In other words, a beam may be indicated/represented by using a reference signal, that is, a QCL relationship between reference signals reflects different or same beams. In addition, a beam may be alternatively represented by using a weight acting on an antenna or a codebook (codebook) acting on an antenna port in a multi-antenna system. That is, alternatively, a beam may correspond to a codebook.

For example, the QCL information of the beam set is shown in Table 1.

**Table 1**

| Beam set index | QCL information |
|---|---|
| A | TCI-state ID-A |
| B | TCI-state ID-B |
| C | TCI-state ID-C |
| ... | ... |

Table 1 shows only QCL information of beam sets whose indexes are A, B, and C. "..." indicates that in addition to this, Table 1 may further include QCL information of other beam sets, or Table 1 may include only the QCL information of the beam sets described above. This is not limited in this application. "..." in the following table may be deduced by analogy, and details are not described again. TCI-state ID (StateId)-A indicates transmission configuration indicator (transmission configuration indicator, TCI) information of the set A, and a TCI is for configuring a quasi co-location QCL relationship between a plurality of downlink reference signals and a physical downlink shared channel (physical downlink shared channel, PDSCH) demodulation reference signal (demodulation reference signal, DMRS). The TCI herein is a TCI corresponding to the access-side beam of the relay device, and may indicate a quasi co-location QCL relationship between a downlink reference signal forwarded by the relay device and a physical downlink shared channel demodulation reference signal. Actually, the TCI may alternatively have another name. This is not limited in this application.

For example, quasi co-location information of beams in a beam set is shown in Table 2.

**Table 2**

| Beam index | QCL information |
|---|---|
| a0 | TCI-state ID-a0 |
| a1 | TCI-state ID-a1 |
| a2 | TCI-state ID-a2 |
| ... | ... |

TCI-state ID-a0 indicates TCI information of the beam a0.

In a possible implementation, the first information includes beam/beam set coverage range information of access-side beams.

For example, the coverage range information of the beam set is shown in Table 3.

**Table 3**

| Beam set index | Coverage range information |
| --- | --- |
| A | Coverage range #A |
| B | Coverage range #B |
| C | Coverage range #C |
| ... | ... |

For example, the coverage range information of the beams in the beam set is shown in Table 4.

**Table 4**

| Beam index | Coverage range information |
| --- | --- |
| a0 | Coverage range #a0 |
| a1 | Coverage range #a1 |
| a2 | Coverage range #a2 |
| ... | ... |

The coverage range corresponds to spatial coverage information of a beam set or a beam. When the coverage range corresponds to spatial coverage information of a beam set, the coverage range of the beam set may be a union set of coverage ranges formed by all of the beams in the beam set, may be a union set of coverage ranges formed by a part of the beams in the beam set, or may be a union set of coverage ranges formed by beams whose beam gains exceed a specific value in the beam set.

The spatial coverage information may refer to a coverage region, and the coverage region may refer to logical region division. For example, the coverage region corresponds to a rectangle, where a length and a width are defined for the rectangle, and the coverage region corresponds to a logical sequence number of the rectangle, or the coverage region corresponds to at least one of a start position of a long side, a start position of a wide side, a length of the long side, a length of the wide side, an end position of the long side, and an end position of the wide side. For another example, the coverage region corresponds to a cuboid, where a length, a width, and a height are defined for the cuboid, and the coverage region corresponds to a logical sequence number of the cuboid, or the coverage region corresponds to at least one of a start position of a long side, a start position of a wide side, a start position of a height, a length of the long side, a length of the wide side, a height, an end position of the long side, an end position of the wide side, and an end position of the height. For another example, the coverage region corresponds to a polar coordinate region, where a radius and an angle are defined for the polar coordinate region, and the coverage region corresponds to a logical sequence number of the radius, or the coverage region corresponds to at least one of a radius start position, a radius end position, an angle start position, and an angle end position.

Alternatively, the spatial coverage information is a coverage angle range (a coverage direction, or a coverage direction range). Specifically, the spatial coverage information may include a horizontal angle and/or a vertical angle. To be specific, the coverage angle range information may include at least one of the following: a horizontal angle width, a horizontal angle start value, a horizontal angle end value, a vertical angle width, a vertical angle start value, or a vertical angle end value.

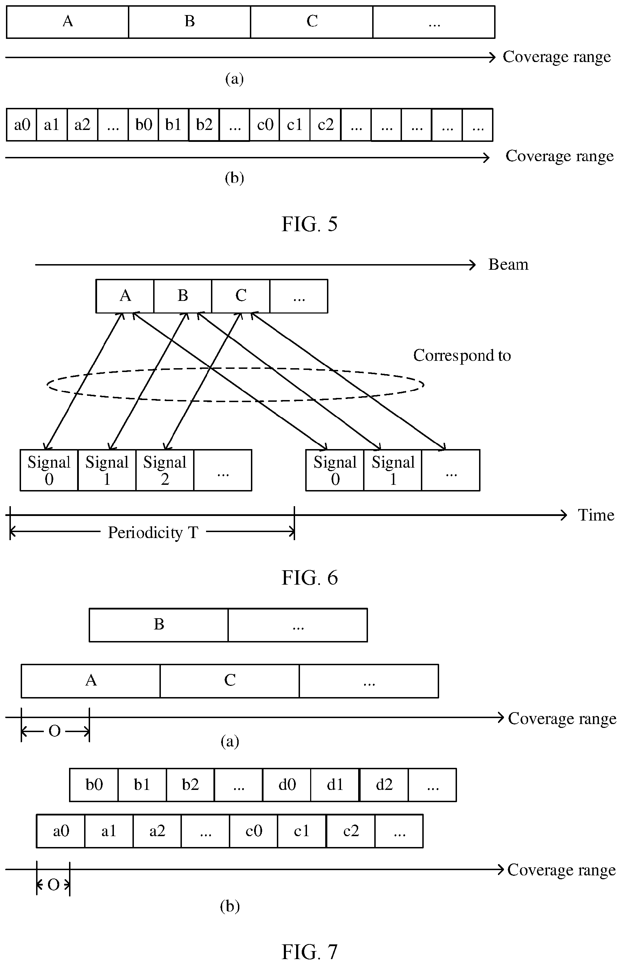

FIG. 4(a) is a schematic in which a coverage region is a square, that is, a coverage region of a beam or a beam set is two-dimensional. A block in FIG. 4(a) represents a coverage range of a beam set or a beam. FIG. 4(a) shows only coverage ranges of adjacent beams. It should be understood that coverage ranges of beam sets or beams may overlap. A coverage range of the access-side beam of the relay device may approximately correspond to a region that is defined by both a horizontal (horizontal) direction and a vertical (vertical) direction in array antenna shaping. For example, an x-axis corresponds to the horizontal direction, and a y-axis corresponds to the vertical direction. A coverage range of a beam or a beam set may be defined as an angle width of 3 dB (the angle width may also be another value, for example, 5 dB or 6 dB), that is, an angle region in a direction with a difference of 3 dB from a gain of a strongest beam. FIG. 4(b) shows a corresponding coverage region in a polar coordinate region. A coverage region of a beam or a beam set is a region abcd, a radius start position is $r_{uv}^{(s)}$, a radius end position is $r_{uv}^{(e)}$, an angle start position is θ1, and an angle end position is $\theta_{uv}^{(e)}$. As shown in FIG. 5, coverage ranges corresponding to access-side beam sets or beams of the relay device may be adjacent. When the coverage ranges corresponding to the beam sets or the beams are adjacent, as shown in FIG. 5(a) and FIG. 5(b), the first information sent by the relay device may include a start coverage range of the beam set A, coverage range width information of the beam sets A, B, C, and the like, and an adjacent/relative sequence of each beam set. In other words, the network device may determine a coverage range of each beam set based on the foregoing information. Alternatively, the first information sent by the relay device may include a start coverage range of the beam a0, coverage range width information of each beam (the beam shown in FIG. 5(b)), and an adjacent/relative sequence of each beam. In other words, the network device may determine a coverage range of each beam based on the foregoing information.

A relative sequence of beam sets or beams may be predefined. If the relative sequence of the beam sets or the beams is predefined, a coverage range of each beam set or each beam may be determined based on a coverage range of a 0th beam set or a 0th beam and a coverage range width of each beam set or each beam. A beam set (or a beam) may be associated with (or correspond to) a signal. As shown in FIG. 6 (FIG. 6 uses a beam set as an example), a relative sequence of beam sets may be determined based on a time domain or frequency domain sequence of signals, or an index (or a sequence number) of a corresponding beam set may be determined based on a time domain or frequency domain position of a signal. T in FIG. 6 may be understood as a sending periodicity of a signal 0 (or another signal such as a signal 1 or a signal 2), or a usage periodicity of the beam set A (or another beam set such as the beam set B or the beam set C). This is not limited in this application.

In this case, the relay device may report, in the first information, only the start coverage range of the 0th beam set and the coverage range width of each beam set, so that the network device can determine the coverage range of each beam set. In FIG. 5(a), an example in which a coverage range is an angle is used. It is assumed that the relative sequence of the beam sets is predefined in a sequence in FIG. 5(a), and the coverage range width of each beam set is W. In this case, an angular coverage range of the 0th beam set (that is, the beam set A) is (S, S+W], where S is a start coverage angle of the beam set A, an angular coverage range of the beam set B is (S+W, S+2W], an angular coverage range of the beam set C is (S+2W, S+3W], and an angular coverage range of an ith beam set is (S+i×W, S+(i+1)×W],

Similarly, the relay device may report, in the first information, only the start coverage range of the 0th beam and the coverage range width of each beam, so that the network device can determine the coverage range of each beam. In other words, the coverage range of each beam in FIG. 5(b) may alternatively be determined in the foregoing manner of determining the coverage range of each beam set.

In a possible implementation, the first information includes a relative relationship between beam sets or a relative relationship between beams of access-side beams.

For example, the relative relationship may be a relationship between coverage ranges, and the relative relationship includes an intersection relationship, an inclusion relationship, a belonging relationship, and a QCL relationship. Alternatively, if a parameter of a coverage range is introduced into the QCL information, the intersection relationship, the inclusion relationship, and the belonging relationship may be considered as several special examples of the QCL relationship.

The intersection relationship means that there is an intersection between beam coverage ranges. To be specific, coverage ranges of access-side beam sets of the relay device or coverage ranges corresponding to access-side beams may overlap with each other. As shown in FIG. 7(a), the beam sets A and C are adjacent and have no intersection relationship, the beam sets B and A have an intersection relationship, and the beam sets B and C have an intersection relationship. In other words, coverage ranges of the beam sets B and A overlap, and coverage ranges of the beam sets B and C overlap. As shown in FIG. 7(b), beams ai and ai+1 are adjacent, beams bi and bi+1 are adjacent, beams ci and ci+1 are adjacent, and beams di and di+1 are adjacent, where i is greater than or equal to 0. Coverage ranges of the beams ai and bi overlap, coverage ranges of the beams ai+1 and bi overlap, coverage ranges of the beams ci and di overlap, and coverage ranges of the beams ci+1 and di overlap. O represents an offset between coverage ranges of beam sets or beams. O may be a half of a coverage range of a beam set or a beam. This is not limited in this application.

If the relay device reports, in the first information, the relative relationship between the beam sets and coverage range information of one of the beam sets, the network device may determine, based on the foregoing information, coverage range information of another beam set that has the relative relationship with the beam set. Alternatively, if the relay device reports, in the first information, the relative relationship between the beams and coverage range information of one of the beams, the network device may determine, based on the foregoing information, coverage range information of another beam that has the relative relationship with the beam.

For example, in FIG. 7(a), if the relay device reports, in the first information, that the angular coverage range of the beam set A is (S, S+W], the angular coverage range of the beam set C is (S+W, S+2W], the beam sets A and C are adjacent, the beam set B intersects the beam sets A and C, and an offset is O, the network device may determine that the coverage range of the beam set B is (S+O, S+W+O].

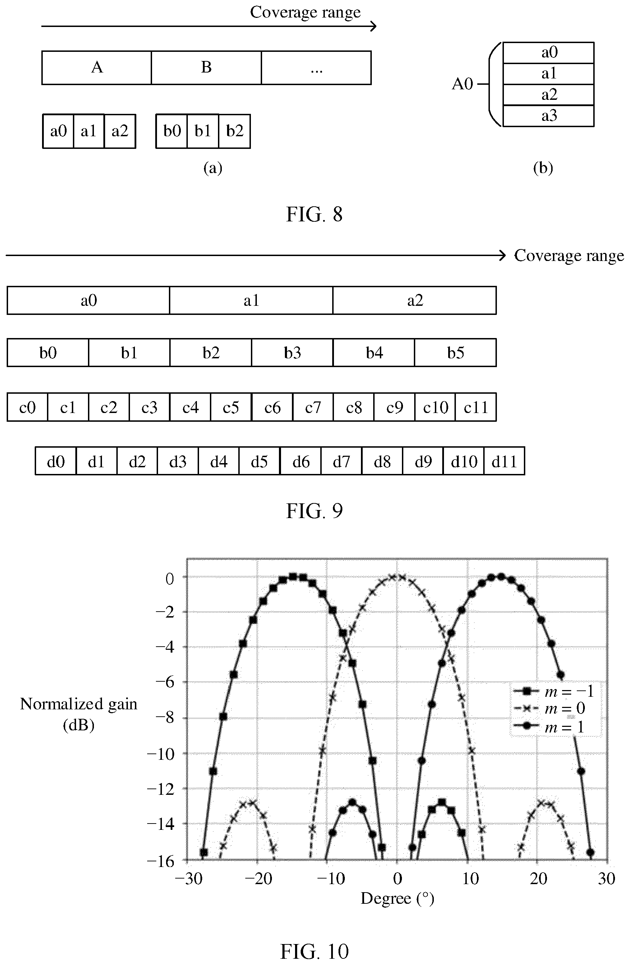

The inclusion relationship or the belonging relationship means that a coverage range of a beam set (or beam) is included in a coverage range of another beam set (or beam). For example, as shown in FIG. 8(a), coverage ranges of the beams a0, a1, and a2 are included in the coverage range of the beam set A, and the coverage ranges of the beams b0, b1, and b2 are included in the coverage range of the beam set B. As shown in FIG. 8(b), a coverage range of a beam A0 is the same as the coverage ranges of the beams a0, a1, a2, and a3. In this case, the beam A0 may be referred to as a wide beam, and the beam a0 may be referred to as a narrow beam. Herein, the wide beam and the narrow beam are relative to sizes of coverage regions of the beams.

Based on the foregoing solution, the relay device reports information about the relationship between beam sets or the relationship between beams to the network device, to assist the network device in scheduling and indicating the access-side beam of the relay device. In addition, the network device may schedule beam scanning and data transmission on the access side of the relay device based on the relative relationship between beam sets (or beams).

It should be understood that beams on the access side of the relay device may not be managed in a form beam sets, that is, the beams on the access side of the relay device are uniformly managed in a form of beams, that is, indexes are uniform. If there are five beams on the access side of the relay device, indexes of the beams may be a0, a1, a2, a3, and a4. If the beams on the access side of the relay device are managed in a form beam sets as shown in FIG. 9, different beams have different coverage ranges. A coverage range of a beam set A (including beams a0, a1, and a2) is basically the same as a coverage range of a beam set B (including beams b0, b1, b2, b3, b4, b4, and b5), and is also basically the same as a coverage range of a beam set C (including beams c0, c1, c2, c3, c4, c5, c6, c7, c8, c9, c10, and c11). That is, three beams, six beams, and 12 beams separately obtain the same coverage range. Therefore, it may be understood that a larger quantity of beams in a same coverage range indicates a narrower coverage range of a corresponding beam, and a higher beam gain may be obtained.

FIG. 10 shows an example of normalized gains of different beams at different angles. A coverage range (or a beam direction) of a beam may be associated with a beam weight (or referred to as a weighting coefficient, a filtering coefficient, or the like), that is, an actual coverage range obtained by a beam of an antenna array is based on an array element (or element) on the antenna array and a digital weighting coefficient and an analog weighting coefficient that function on the antenna array.

It is assumed that the antenna array is a linear antenna array, an element spacing d is a half wavelength, a quantity $N_e$ of elements is equal to 8, an upsampling parameter (or an oversampling parameter) a is equal to 1/2, and an offset b is equal to 0. In this case, a beam coverage range corresponding to an oversampling discrete Fourier transform (discrete Fourier transform, DFT) weight is shown in FIG. 10. The horizontal coordinates represent angles, and the vertical coordinates represent normalized gains (measured in decibel). Beam m=-1 and beam m=0 intersect in a -3° direction, and a beam gain at an intersection point is about 4 dB lower than a peak value. The beam m=0 and beam m=1 intersect in a 3° direction, and a beam gain at an intersection point is about 4 dB lower than the peak value, where m is a beam index. The beam shown by m=-1 may correspond to the beam a0 in FIG. 7(b), the beam shown by m=1 may correspond to the beam a1 in FIG. 7(b), and the beam shown by m=0 may correspond to the beam b0 in FIG. 7(b). Because the coverage areas of the beams a0 and a1 are the same as the coverage area of the beam b0, normalized gain wave peaks of the beams a0, a1, and b0 are the same.

In a possible implementation, the first information includes antenna array information and/or weight generation information on the access side of the relay device.

For example, the antenna array information includes one or more parameters: a quantity $N_e$ of elements, an element spacing d, a quantity $N_p$ of phase shifters, a quantity of digital channels, a quantity of analog channels, and a quantity of ports. Each parameter may be two-dimensional. For example, a horizontal (horizontal, H) direction and a vertical (vertical, V) direction are distinguished, $(N_{e,H}, N_{e,V})$ represents a quantity $N_{e,H}$ of elements in the horizontal direction and a quantity $N_{e,V}$ of elements in the vertical direction, $(d_H, d_V)$ represents an element spacing $d_H$ in the horizontal direction and an element spacing $d_V$ in the vertical direction, and $(N_{p,H}, N_{p,V})$ represents a quantity $N_{p,H}$ of phase shifters in the horizontal direction and a quantity $N_{p,V}$ of phase shifters in the vertical direction.

For example, the weight generation information may be a weight $\boldsymbol{u}_m$ corresponding to an antenna array, and $\boldsymbol{u}_m$ may be a vector based on DFT, where $m$ represents a beam index.

$$\boldsymbol{u}_m = \left[ e^{j\frac{2\pi m \times 0}{N_e}}, e^{j\frac{2\pi m \times 1}{N_e}}, \ldots, e^{j\frac{2\pi m \times (N_e-1)}{N_e}} \right]^T$$ , that is, the weight $\boldsymbol{u}_m$ is represented as an $N_e \times 1$ column vector,

where $j = \sqrt{-1}$ is an imaginary unit, e is a base of a natural logarithm, $m$ is any integer, and T is a matrix or vector

transpose symbol.

$$\boldsymbol{u}_m = \left[ e^{j\frac{2\pi m(am+b)\times 0}{N_e}}, e^{j\frac{2\pi(am+b)\times 1}{N_e}}, ..., e^{j\frac{2\pi(am+b)\times(N_e-1)}{N_e}} \right]^T$$

Alternatively, $\qquad$ , that is, the weight $\boldsymbol{u}_m$ is represented as an $N_e \times 1$ column vector. In the foregoing formula, $a$ may correspond to the upsampling (or oversampling) parameter, and $b$ is an offset. For example, if $a = \dfrac{1}{2}$ , a beam (or weight) corresponding to $\boldsymbol{u}_m$ is twice an upsampling DFT beam; and if $a = \dfrac{1}{4}$ , a beam (or weight) corresponding to $\boldsymbol{u}_m$ is four times the upsampling DFT beam.

Alternatively, if $N_e = 2N_p$, that is, one phase shifter in the antenna array drives two elements,

$$\boldsymbol{u}_m = \left[ e^{j\frac{2\pi m\times 0}{N_p}}, e^{j\frac{2\pi m\times 0}{N_p}}, e^{j\frac{2\pi m\times 1}{N_p}}, e^{j\frac{2\pi m\times 1}{N_p}}, ..., e^{j\frac{2\pi m\times(N_p-1)}{N_p}}, e^{j\frac{2\pi m\times(N_p-1)}{N_p}} \right]^T$$

, that is, the weight $\boldsymbol{u}_m$ is represented as a $2N_p \times 1$ column vector, where $m$ is any integer or real number. The foregoing uses an example in which one phase shifter drives two elements and the two elements are adjacently placed. Actually, any other quantity and any other layout may be used, and extension may be performed in a similar manner. The following example shows a manner of obtaining a corresponding weight value.

Alternatively, it is considered that $N_e = 2N_p$, that is, one phase shifter in the antenna array drives two elements.

$$\boldsymbol{u}_m = \left[ e^{j\frac{2\pi(am+b)\times 0}{N_p}}, e^{j\frac{2\pi(am+b)\times 0}{N_p}}, e^{j\frac{2\pi(am+b)\times 1}{N_p}}, e^{j\frac{2\pi(am+b)\times 1}{N_p}}, ..., e^{j\frac{2\pi(am+b)\times(N_p-1)}{N_p}}, e^{j\frac{2\pi(am+b)\times(N_p-1)}{N_p}} \right]^T$$

, that is, the weight $u_m$ is represented as a $2N_p \times 1$ column vector, where $m$ is any integer or real number.

Alternatively, if $N_e = 3N_p$, that is, one phase shifter in the antenna array drives three elements, $\boldsymbol{u}_m =$

$$\left[ e^{j\frac{2\pi m\times 0}{N_p}}, e^{j\frac{2\pi m\times 0}{N_p}}, e^{j\frac{2\pi m\times 0}{N_p}}, e^{j\frac{2\pi m\times 1}{N_p}}, e^{j\frac{2\pi m\times 1}{N_p}}, e^{j\frac{2\pi m\times 1}{N_p}}, ..., e^{j\frac{2\pi m\times(N_p-1)}{N_p}}, e^{j\frac{2\pi m\times(N_p-1)}{N_p}}, e^{j\frac{2\pi m\times(N_p-1)}{N_p}} \right]^T$$

, that is, the weight $\boldsymbol{u}_m$ is represented as a $2N_p \times 1$ column vector, where $m$ is any integer or real number.

For example, the weight generation information may be a weight $\boldsymbol{u}_m$ corresponding to an antenna array, where $\boldsymbol{u}_m$ may be a vector based on extended DFT.

For example, $\boldsymbol{u}_m$ may be obtained based on DFT square rate extension or in any other form. This is not limited in this application. If the square rate extension is used as an example,

$$\boldsymbol{u}_m = \left[ e^{j\frac{2\pi m\times 0}{N_e}}, e^{j\frac{2\pi m\times 1^2}{N_e}}, ..., e^{j\frac{2\pi m\times(N_e-1)^2}{N_e}} \right]^T$$
.

It should be understood that the weight generation information may also be understood as a weight generation manner (a calculation formula of $\boldsymbol{u}_m$), for example, a transmit weight or a receive weight of a beam. The transmit weight is also referred to as transmit filtering, and the receive weight is also referred to as receive filtering. Different weight generation information may be for generating different beams or beam sets. Dense beams or beam sets with narrow coverage directions may be generated by using an oversampling DFT weight. Beams or beam sets with narrow coverage directions and moderate spacings may be generated by using a DFT weight. Beams with wide coverage directions may be generated by using a DFT square-rate expansion weight.

It should be further understood that the foregoing calculation formula of $\boldsymbol{u}_m$ is a weight generation manner based on oversampling DFT, and the calculation formula of $\boldsymbol{u}_m$ may also be a weight generation manner based on a Hadamard matrix, a weight generation manner based on different cyclic shifts of a base vector, a weight generation manner based on a Golay complementary sequence (or matrix), or a weight generation manner based on another thing. This is not limited in this application.

Therefore, a plurality of weight generation manners may be simultaneously used on a relay device side, to generate different beams (with different coverage ranges and/or different spacings), to meet different requirements. When the relay device reports the antenna array information and/or the weight generation information on the access side in the first information, the network device may determine a beam or a beam set on the access side of the relay device, a beam index or a beam set index, coverage range information of the beam or the beam set, quantity information of the beam or the beam set, and the like.

It should be understood that, if the weight generation information and the antenna array information are determined, the corresponding weight $u_m$ and the beam coverage range are directly associated with m, that is, a beam whose index is m corresponds to the weight $u_m$. For example, that the weight and the coverage range of the beam are directly associated with m may be described in FIG. 9 and FIG. 10. Because the coverage ranges of the beams c0 and c1 in FIG. 9 separately overlap the coverage range of the beam d0, it may be considered that the beam c0 in FIG. 9 corresponds to the beam shown by m=-1 in FIG. 10, that is, a weight of the beam c0 is $u_{-1}$; the beam c1 in FIG. 9 corresponds to the beam shown by m=1 in FIG. 10, that is, a weight of the beam c1 is $u_1$; and the beam d0 in FIG. 9 corresponds to the beam shown by $m$=0 in FIG. 10, that is, a weight of the beam d0 is $u_0$. Alternatively, similarly, FIG. 7(b) and FIG. 10 are used as an example for description. Because the coverage ranges of the beams a0 and a1 in FIG. 7(b) separately overlap the coverage range of the beam b0, it may be considered that the beam a0 in FIG. 7(b) corresponds to the beam shown by $m$=-1 in FIG. 10, that is, a weight of the beam a0 is $u_{-1}$; the beam a1 in FIG. 7(b) corresponds to the beam shown by $m$=1 in FIG. 10, that is, a weight of the beam a1 is $u_1$; and the beam b0 in FIG. 7(b) corresponds to the beam shown by $m$=0 in FIG. 10, that is, a weight of the beam b0 is $u_0$.

In a possible implementation, the first information includes at least one of the correspondence between a beam index and a weight value, the correspondence between a beam index and a beam, and the correspondence between a beam set index and a beam.

For example, the network device may determine, based on the correspondence between a beam index and a weight value, indexes of beams generated by the access side of the relay device by using different weights, and may directly indicate an index of a beam when subsequently configuring the beam for measurement (or data transmission). Alternatively, the network device may directly indicate, based on the correspondence between a beam index and a beam, an index of a beam when subsequently configuring the beam used for measurement (or data transmission).

Optionally, the network device may store the correspondence between a beam index and a weight, the correspondence between a beam index and a beam, and the correspondence between a beam set index and a beam, to facilitate subsequent beam configuration or indication.

The foregoing different implementations separately describe the manners in which the network device determines the beams on the access side of the relay device when the first information includes any one of the quantity information of the beam or the beam set, the quasi co-location information of the beam or the beam set, the coverage range information of the beam or the beam set, the relative relationship between the beams or the beam sets, the antenna array information, and the weight generation information. Certainly, the first information may further include any two or more of the foregoing items. When the first information includes any two or more of the foregoing items, the network device may determine the beams on the access side of the relay device with reference to the foregoing different implementations. Details are not described herein again.

Based on the foregoing implementations, the relay device may report, to the network device, all access-side beam information that may be generated/implemented by the relay device, to provide the network device with information for configuring a scanning beam for the relay device.

Optionally, the beams on the access side of the relay device include a plurality of types of beams, where different types of beams are for forwarding different channels or services.

In a possible implementation, the beams on the access side of the relay device may be classified based on a difference (for example, a coverage range difference) between beams or beam sets on the access side, so that different types of beams are for forwarding different channels or services, thereby meeting different service requirements, and supporting fast and low-overhead beam scanning on the access side.

For example, the beam sets on the access side of the relay device are classified. As shown in Table 5, different types of beam sets are for forwarding different channels or different services.

**Table 5**

| Beam set index | Forwarding channel |
|---|---|
| A | Synchronization signal and physical broadcast channel block (synchronization signal and physical broadcast channel block, SSB), system information, and random access channel (physical random access channel, PRACH) |
| B | Beam management reference signal (for example, CSI-RS or SRS) |
| C | Downlink data channel and uplink data channel |

(continued)

| Beam set index | Forwarding channel |
|---|---|
| ... | ... |

For example, the beam sets on the access side of the relay device are classified. As shown in Table 6, different types of beam sets are for forwarding different channels or different services.

**Table 6**

| Beam index | Forwarding channel |
|---|---|
| a | SSB, system information, and PRACH |
| b | Beam management reference signal (for example, CSI-RS or SRS) |
| c | Downlink data channel and uplink data channel |
| ... | ... |

For example, different access-side beam sets (or access-side beams) correspond to different types. As shown in Table 7, channels or signals that can be forwarded in different types are also shown in Table 7.

**Table 7**

| Beam set (or beam) | Type (Channel) |
|---|---|
| A (or a) | First-type beam management signal (for example, SSB or PRACH) |
| B (or b) | Second-type beam management signal (for example, CSI-RS or SRS) |
| C (or c) | Third-type beam management signal (uplink/downlink data channel) |
| ... | ... |

It should be understood that when the beams or the beam sets are classified by coverage range, coverage ranges of the beams or the beam sets of the different types are different. Certainly, the beams or the beam sets may be alternatively classified by weight or in another manner. This is not limited in this application.

It should be further understood that, in the foregoing example, a single beam in the set A may have a QCL relationship with one or more beams in the set B. The relay device and the network device may exchange the QCL information. For example, the relay device reports the following QCL information of the network device: a QCL relationship between beams in the set A and the set B. For another example, the network device configures the relay device to separately send at least one beam a0 in the beam set A and some beams (for example, b0 and b 1) in the beam set B at different time positions. A time position of the beam a0 corresponds to sending time of an SSB, a SIB, a PRACH, or a paging message. Both the beam b0 and the beam b1 have a QCL relationship with the beam a0, and are respectively sending time of a CSI-RS #i (corresponding to the beam b0) and a CSI-RS #j (corresponding to the beam b1), or sending time of an SRS #m (corresponding to the beam b0) and an SRS #n (corresponding to the beam b1), where #i and #j are for distinguishing different CSI-RSs, and #m and #n are for distinguishing between different SRSs.

The method 300 further includes the following step.

S302: The network device sends first configuration information to the relay device, where the first configuration information includes information about the at least one first beam. Correspondingly, the relay device receives the first configuration information.

It should be understood that in a downlink signal-based beam management process, the first configuration information may be for determining the information about the at least one first beam. Beams indicated by the first configuration information include the at least one first beam in S310 and S311.

Optionally, the first configuration information includes at least one of the following:

an index of a beam or a beam set;
an oversampling parameter;
an offset;
beam weight generation information;

usage time corresponding to the beam or the beam set; and

a scanning periodicity corresponding to the beam or the beam set.

In a possible implementation, after receiving the first information, the network device configures some access-side transmit beams, so that the access side of the relay device amplifies and forwards the first downlink signal. In other words, the first configuration information includes the index of the beam set or the beam.

In a possible implementation, the at least one first beam configured by using the first configuration information is included in the beam or the beam set that can be determined based on the first information.

For example, the first configuration information includes an index of one or more beam sets, each beam set includes at least one transmit beam, quantities of transmit beams included in the beam sets may be the same or may be different, and coverage ranges of the beam sets may be the same or may be different.

Alternatively, the first configuration information includes an index of one or more transmit beams, and each transmit beam may have a different coverage range.

Alternatively, the first configuration information includes one or more indexes corresponding to a transmit beam weight. As shown in FIG. 7(b), a value of the index m may be a0, a1, a2, c0, c1, or the like.

Alternatively, the first configuration information includes at least one of the oversampling parameter, the offset, and the weight generation information. In this case, the relay device may determine at least one access-side transmit beam based on at least one of the oversampling parameter, the offset, or the weight generation information, to send the first downlink signal by using the at least one access-side transmit beam.

It should be understood that the first information reported by the relay device may enable the network device and the relay device to agree on the correspondence between a beam index and a beam and a correspondence between a beam index and beam weight generation information. Therefore, when the first configuration information includes the beam index, the index corresponding to the beam weight, or the beam weight generation information, the relay device may determine, based on the first configuration information, the at least one access-side transmit beam for sending the first downlink signal.

In a possible implementation, the first configuration information may further include usage time corresponding to the transmit beam.

For example, the network device configures usage time of a beam for the beam shown in FIG. 9, as shown in Table 8. It should be understood that Table 8 may be directly configured in the first configuration information, or Table 8 may not be directly configured in the first configuration information, and the relay device may determine Table 8 based on the first configuration information.

**Table 8**

| Beam | a0 | a1 | b0 | b2 | c0 | c2 |
|------|----|----|----|----|----|----|
| Time | t0 | t1 | t2 | t3 | t4 | t5 |

That is, the beam a0 is used at the time t0, a1 is used at the time 11, and so on. At time ti, the relay device forwards the first downlink signal by using a corresponding access-side transmit beam. For example, during configuration, the time t0, t1, t2, t3, t4, and t5 may be arranged in chronological order, that is, may correspond to a sequence of forwarding signals by using different beams. In addition, in chronological order, t1, t2, t3, t4, and t5 may be represented as a time interval relative to a previous beam. For example, t1 is a time interval between using the beam a0 and using the beam a1. Such a configuration can reduce overheads.

It should be understood that, if a coverage range of the beam a0 or a1 is greater than a coverage range of the beam b0 or b2, the coverage range of the beam b0 or b2 is greater than a coverage range of the beam c0 or c2. In this case, the wide beams a0 and a1 may be first scanned, the narrow beams b0 and b2 are further scanned, and the narrower beams c0 and c2 are finally scanned. Compared with directly scanning narrow beams c0, c1, c2, and c3, a quantity of scanned beams is much smaller, so that fast low-overhead scanning can be implemented.

Further, time intervals between different beams may be different. For example, a time interval between a0 and a1, a time interval between b0 and b2, and a time interval between c0 and c2 are smaller, and a time interval between a0 and b0 and a time interval between b0 and c0 are larger.

In a possible implementation, the first configuration information may further include a scanning periodicity of the transmit beam.

For example, different beams or different beam sets have different scanning periodicities (a time interval between two times of beam scanning on a same beam or beam set is a scanning periodicity). For example, a scanning periodicity of a beam with later usage time is shorter. Table 8 is used as an example. A scanning periodicity of the beam c2 is the shortest. This is because a coverage range of a narrow beam is small. If the terminal device has mobility, a beam of the relay device is prone to deviate, and consequently transmission performance is unstable. Therefore, a narrow beam with a short scanning periodicity can improve communication performance.

In a possible implementation, the first configuration information includes a quantity of types of beams or beam sets, a quantity of beams of each type, and beam information (for example, a beam index) of a first-type beam.

For example, a quantity of beam types is 3, quantities of first-type beams, second-type beams, and third-type beams are all 2, and the first-type beams are beams a0 and a1. In this case, the second-type beams may be determined based on a scanning result of the first-type beams, and the third-type beams may be determined based on a scanning result of the second-type beams. Table 8 is used as an example. a0 and a1 are first-type beams, b0 and b2 are second-type beams, and c0 and c2 are third-type beams.

In another implementation, there may be more types of beams or beam sets. Finally, a beam with a higher performance gain is determined.

Optionally, a beam index of the second-type beam or the third-type beam may be determined by the relay device based on indication information (for example, the second information in S320) of the network device. The indication information of the network device may be determined by the network device based on a measurement result fed back by the terminal device (for example, a measurement result in S313 or S314).

It should be understood that the time in this application may be understood as a slot, an orthogonal frequency division multiplexing (orthogonal frequency division multiplexing, OFDM) symbol, or time for transmitting a data block.

Optionally, the method 300 further includes the following step.

S303: The relay device receives second configuration information from the network device, where the second configuration information is for forwarding the first signal, and the second configuration information includes at least one of the following:

an amplification multiple (amplification gain) of the first signal, or transmit power of the first signal.

For example, the second configuration information includes an amplification multiple (amplification gain) and/or transmit power. The relay device may forward the first downlink signal based on the amplification multiple (amplification gain) and/or the transmit power.

Optionally, the first configuration information and/or the second configuration information may be carried on any one of a physical broadcast channel (physical broadcast channel, PBCH), remaining minimum system information (remaining minimum system information, RMSI), a system information block (system information block, SIB) 1, a SIB2, a SIB3, a media access control control element (media access control-control element, MAC-CE), downlink control information (downlink control information, DCI), radio resource control (radio resource control, RRC), and system information. This is not limited in this application.

It should be understood that the first configuration information and the second configuration information may be carried in different messages or signaling. When the first configuration information and the second configuration information are carried in different messages or signaling, a sequence of S302 and S303 is not limited in this application. S302 may be performed before S303, or S303 may be performed before S302. Certainly, the first configuration information and the second configuration information may also be carried in a same message or same signaling. This is not limited in this application.

The method 300 further includes the following steps.

S312: The terminal device measures the first signal sent by using the at least one first beam (for example, the at least one access-side transmit beam), to obtain a beam (for example, the at least one first beam, that is, the at least one access-side transmit beam) measurement result.

For example, the measurement result may be channel state information. The channel state information may include at least one of the following: an index of one or more resources, a channel quality indicator (channel quality indicator, CQI), reference signal received quality (reference signal received power, RSRP), a precoding matrix indicator (precoding matrix indicator, PMI), a rank indicator (rank indicator, RI), a layer indicator (layer indicator, LI), a channel state information resource index (CSI-RS index, CRI) field, a synchronization signal/physical broadcast channel block resource index (synchronization signal/physical broadcast channel block resource index, SSBRI), and the like. This is not limited in this application.

S313 and S314: The terminal device sends the measurement result to the network device, and the relay device assists in sending the measurement result, where the measurement result includes the channel state information. Correspondingly, the relay device receives the measurement result, and forwards the measurement result to the network device. Correspondingly, the network device receives the measurement result.

For example, the measurement result may be carried in uplink control information (uplink control information, UCI), and transmitted on a physical uplink control channel (physical uplink control channel, PUCCH) or a physical uplink shared channel (physical uplink shared channel, PUSCH).

It should be understood that S313 and S314 may be performed simultaneously, that is, processes in which the relay device amplifies and forwards the measurement result may be performed simultaneously.

The method 300 further includes the following step.

S320: The network device sends the second information to the relay device, where the second information includes information about at least one second beam determined by the network device based on the measurement result of the beam, and at least one beam in the at least one second beam is different from a beam in the at least one first beam. Correspondingly, the relay device receives the second information.

In a downlink signal-based beam management process, the second beam may be a second access-side transmit/receive beam, and at least one beam in at least one second access-side transmit/receive beam is different from a beam in at least one first access-side transmit beam.

It should be understood that the beam measurement result is obtained by the terminal device through measurement based on the first downlink signal in S312. In addition, before the network device sends the second information to the relay device, the network device determines the at least one second beam (for example, the second access-side transmit/receive) based on the measurement result.

For example, the second information may be a beam index of at least one second beam.

For example, the second information may be a coverage range of the at least one second beam, weight generation information, antenna array information, or the like.

It should be understood that before S320, the network device needs to determine the at least one second beam, and the second beam may be a second access-side transmit/receive beam.

A principle used when the network device determines the at least one second access-side transmit/receive beam based on the measurement result may be beam oversampling or beam interpolation.

The network device performs interpolation on the first access-side transmit beam based on the measurement result in S314, to determine the at least one second access-side transmit/receive beam.

For example, the network device determines the at least one second access-side transmit/receive beam through beam interpolation. FIG. 9 is used as an example. The scanning beams (the first access-side transmit beam) in S311 are beams b0 and b2. The network device performs interpolation on the beams b0 and b2 based on a measurement result of the scanning beams, to obtain a second access-side transmit/receive beam c1. The beam c1 has better transmission performance than the beams b0 and b2.

For example, the network device determines the at least one second access-side transmit/receive beam through beam interpolation. FIG. 9 is used as an example. The scanning beams (the first access-side transmit beam) in S311 are beams a0, a1, and a2. The network device performs interpolation on the beams a0, a1, and a2 based on a measurement result of the scanning beams, to obtain a second access-side transmit/receive beam b0. The beam b0 has better transmission performance than the beams a0, a1, and a2.

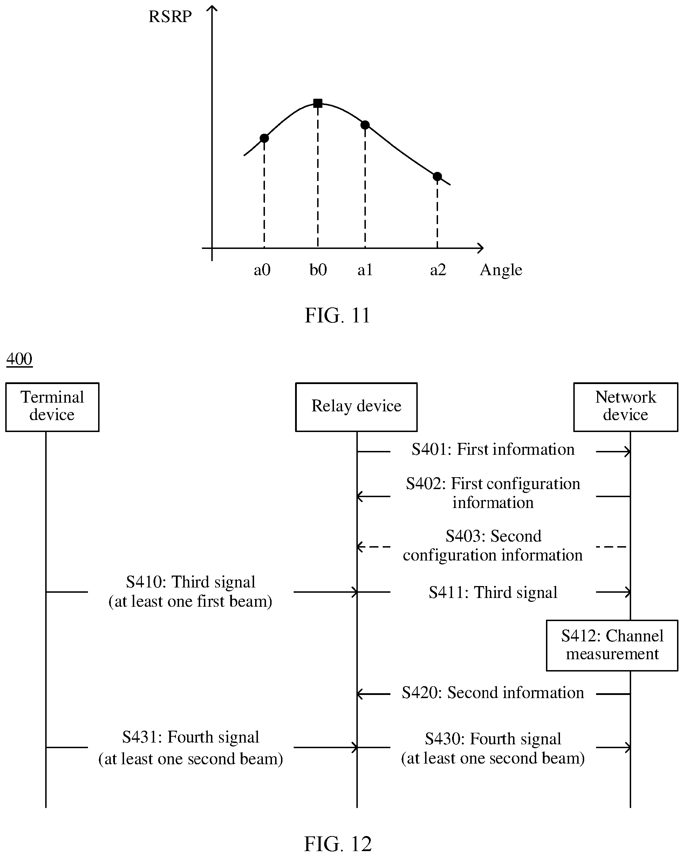

For example, as shown in FIG. 11, a horizontal coordinate may be angle information (or a coverage range in the foregoing embodiment), and a vertical coordinate is RSRP. The network device may obtain RSRP of three access-side transmit beams (for example, the beams a0, a1, and a2) of the relay device based on the measurement result, and then the network device may perform interpolation based on an angle of the access-side transmit beam of the relay device and the RSRP to obtain a second beam (the beam b0). The beam b0 may be used as a second access-side transmit/receive beam.

An interpolation method may be all methods that a continuous function can be interpolated on a basis of discrete data so that the continuous curve passes all given discrete data points. The interpolation method may be, for example, polynomial function interpolation or spline interpolation. This is not limited in this application.

The network device may calculate a good location and corresponding RSRP based on angles of the foregoing three beams, RSRP corresponding to each beam, and an interpolation function. The polynomial function interpolation is used as an example. The network device may first obtain coefficients a, b, and c of a polynomial (for example, $ax^2+bx+c$) based on the foregoing three beams, to determine a peak point of the polynomial and a horizontal coordinate of the peak point. The horizontal coordinate is an angle of the second beam, and a vertical coordinate is RSRP that can be obtained based on the second beam b0. According to the interpolation method, a better transmit beam (corresponding to higher RSRP) can be obtained with lower scanning overheads. For example, a better beam may be determined from a total of six beams b0 to b5 by scanning only beams a0, a1, and a2. Compared with scanning the beams b0 to b5 one by one, this reduces beam scanning overheads by 50%. In addition, because the beams b0 to b5 have higher beam gains than the beams a0 to a2, signal transmission performance is better.

It should be understood that the foregoing is an interpolation process performed by using a beam and RSRP corresponding to the beam. In addition, an interpolation process may be further performed by using a beam and a normalized gain corresponding to the beam, or interpolation may be performed in another manner, to obtain a good transmit/receive beam. This is not limited in this application.

The network device may further oversample the at least one first access-side transmit beam based on the measurement result, to determine the at least one second access-side transmit/receive beam.

For example, the network device determines the at least one second access-side transmit/receive beam through beam oversampling (meaning being dense). FIG. 9 is used as an example. The scanning beams (the first access-side transmit beam) in S310 are beams a0 and a1. The network device oversamples the beams a0 and a1 based on a

**EP 4 429 124 A1**

measurement result of the scanning beams, to obtain second access-side transmit/receive beams c0, c2, and c4. Compared with the beams a0 and a1, the beams c0, c2, and c4 have narrower coverage ranges, and the beams c0, c2, and c4 are denser. Therefore, transmission performance is better. Alternatively, the network device oversamples the beams a0 and a1 based on a measurement result of the scanning beams, to obtain second access-side transmit/receive beams b0 and b2. Compared with the beams a0 and a1, the beams b0 and b2 have narrower coverage ranges, and therefore have better transmission performance.

In another possible implementation, S320 may be replaced with the following: The network device forwards the measurement result (the measurement result in S314) to the relay device, where the measurement result includes the channel state information. Correspondingly, the relay device receives the measurement result.

The relay device determines the at least one second access side transmit/receive beam based on the measurement result, and a principle for determining the at least one second access side transmit/receive beam may be beam oversampling or beam interpolation.

Alternatively, in another possible implementation, a measurement result received by the relay device is sent by the terminal device (that is, the measurement result in S313). The relay device determines the at least one second access side transmit/receive beam based on the measurement result, and a principle for determining the at least one second access side transmit/receive beam may be beam oversampling or beam interpolation.

Specifically, for a method for determining, by the relay device, the at least one second access side transmit/receive beam based on the beam oversampling or the beam interpolation, refer to the foregoing method for determining, by the network device, the at least one second access side transmit/receive beam based on the beam oversampling or the beam interpolation. Details are not described herein again.

The method 300 further includes the following steps.

S330 and S331: The network device sends the second signal to the terminal device, and the relay device assists in sending the second signal. Correspondingly, the relay device receives the second signal by using a backhaul-side receive beam, and forwards the second signal to the terminal device by using at least one second beam. The at least one second beam is determined based on a measurement result of a beam (for example, the at least one first beam), and at least one beam in the at least one second beam is different from a beam in the at least one first beam. Correspondingly, the terminal device receives the second signal.

In a possible implementation, the second signal in this embodiment of this application is a second downlink signal, for example, a downlink reference signal, and is for beam management, channel estimation, auxiliary signal demodulation, detection, or the like.

For example, the reference signal may include a DMRS, a CSI-RS, a PTRS, an SSB, a TRS, an SRS, a PRACH, and the like. This is not limited in this application.

It should be understood that the second signal may be for measuring the at least one second beam, to obtain at least one third beam with higher transmission performance. At least one beam in the at least one third beam is different from a beam in the at least one second beam, or at least one beam in the at least one third beam is different from a beam in the at least one first beam. For a process in which the relay device or the network device measures the at least one second beam to obtain the at least one third beam, refer to the foregoing process in which the at least one first beam is measured to obtain the at least one second beam. Details are not described herein again. A beam measurement process may be repeated for a plurality of times until the network device or the relay device determines a beam that can be for transmitting data (for example, a beam whose received signal quality exceeds a specified threshold or whose received signal quality is highest).

In a possible implementation, the second signal in this embodiment of this application is downlink data, a PDSCH signal, or a physical downlink control channel (physical downlink control channel, PDCCH) signal.

It should be understood that if the second signal is downlink data, a PDSCH signal, or a PDCCH signal, it may indicate that the at least one second beam is a beam that has good transmission performance and that is determined by the network device or the relay device and applicable to data transmission.

In a possible implementation, S330 and S331 may be replaced with the following: The terminal device sends the second signal to the network device, and the relay device assists in sending the second signal. Correspondingly, the relay device receives the second signal from the terminal device by using the at least one second beam, and sends the second signal to the network device by using a backhaul-side transmit beam. The at least one second beam is determined based on a measurement result of a beam (for example, a beam in the at least one first beam), and at least one beam in the at least one second beam is different from a beam in the at least one first beam. Correspondingly, the network device receives the second signal. In other words, the relay device uses the at least one second beam to assist the terminal device in uplink transmission.

It should be understood that the second signal is an uplink signal, and may be an uplink reference signal, an uplink data signal, or an uplink control signal. This is not limited in this application.

Optionally, in the foregoing implementation, the backhaul-side transmit beam is the same as a backhaul-side receive beam.

For example, that the backhaul-side transmit beam is the same as the backhaul-side receive beam may be understood as that a spatial transmit parameter corresponding to the backhaul-side transmit beam is the same as a spatial receive parameter corresponding to the backhaul-side receive beam.

Optionally, the access-side receive beam is the same as the access-side transmit beam. In other words, the at least one second beam obtained through measurement by using the at least one first beam may be a receive beam, or may be a transmit beam.

For example, that the access-side transmit beam is the same as the access-side receive beam may be understood as that a spatial transmit parameter corresponding to the access-side transmit beam is the same as a spatial receive parameter corresponding to the access-side receive beam.

It should be understood that S330 and S331 may be performed simultaneously.

FIG. 12 is a flowchart of a method for managing an access-side receive beam of a relay device according to an embodiment of this application. The method 400 shown in FIG. 12 includes the following steps.

S410 and S411: A terminal device sends a third signal to a network device, and the relay device assists in sending the third signal. Correspondingly, the relay device receives the third signal by using at least one first beam, and forwards the third signal to the network device. The third signal is for beam (for example, the at least one first beam) measurement. Correspondingly, the network device receives the third signal.

For example, in an uplink signal-based beam management process, the first beam may be a first access-side receive beam, the third signal may be a first uplink signal, and the third signal is for measuring the at least one first beam (for example, the first access-side receive beam).

It should be understood that S410 and S411 may be performed simultaneously, that is, the relay device may receive, amplify, and forward a signal simultaneously. A quantity of second beams for forwarding the first uplink signal may be less than a quantity of beams that can be generated by the relay device. For example, if the relay device can generate M beams, the relay device selects a part of beams (for example, N beams) from the M beams to forward the first uplink signal, where M and N are integers greater than or equal to 1, and N is less than or equal to M. For another example, if the relay device can generate M beams, the network device indicates the relay device to select a part of beams (for example, N beams) from the M beams to forward the first uplink signal, where M and N are integers greater than or equal to 1, and N is less than or equal to M.

Measurement of the access-side receive beam may be understood as scanning of the access-side receive beam. To be specific, the terminal device sends the first uplink signal by using a fixed transmit beam, and the relay device receives the first uplink signal by using different access-side receive beams. Alternatively, measurement of the access-side receive beam may be understood as scanning of a transmit beam of the terminal device. To be specific, the terminal device sends the first uplink signal by using different transmit beams on the terminal device side, and the relay device receives the first uplink signal by using a same receive beam, and forwards the first uplink signal to the network device, so that the network device measures the first uplink signal. Alternatively, measurement of an access-side receive beam may be understood as alignment between the access-side receive beam and a transmit beam of the terminal device. To be specific, the first uplink signal is sent and received for a plurality of times, to improve a degree of alignment between the access-side receive beam of the relay device and the transmit beam of the terminal device, and improve signal transmission performance.

The third signal in this embodiment of this application may be an uplink reference signal, and is for channel estimation, beam management, auxiliary signal demodulation, detection, or the like. The reference signal may include a demodulation reference signal (demodulation reference signal, DMRS), a tracking reference signal (tracking reference signal, TRS), a channel sounding reference signal (sounding reference signal, SRS), a physical random access channel (physical random access channel, PRACH) signal, or the like. This is not limited in this application.

It should be understood that in uplink transmission, before sending the third signal, the terminal device obtains (or receives) resource configuration information of the first third signal, and the terminal device sends the third signal based on the resource configuration information.

For example, the resource configuration information may be carried in RRC signaling. The resource configuration information is information related to a measurement resource (for example, a resource on which a reference signal is located), and is configured by using a three-level structure of resource configuration (resourceConfig)-resource set (resourceSet)-resource (resource) in a protocol. The network device may configure one or more resource configurations for the terminal device. Each resource configuration includes one or more resource sets, and each resource set may include one or more resources. Each resource configuration/resource set/resource includes an index of the resource configuration/resource set/resource (for example, each resource configuration includes an index of the resource configuration, each resource set includes an index of the resource set, and each resource includes an index of the resource). In addition, some other parameters are further included, for example, a resource periodicity and a signal class corresponding to the resource.

It should be understood that before the terminal device sends the third signal or before the relay device sends the third signal, the network device sends the resource configuration information of the third signal to the relay device and the terminal device. For specific content of the resource configuration information, refer to the descriptions in S410. Details are not described herein again.

The method 400 further includes the following steps.

S401 is the same as S301. Details are not described herein again.

S402: The network device sends first configuration information to the relay device, where the first configuration information includes information about the at least one first beam. Correspondingly, the relay device receives the first configuration information.

It should be understood that in an uplink signal-based beam management process, the first configuration information is for determining the information about the at least one first beam. Beams indicated by the first configuration information include the at least one first beam in S410 and S411.

Optionally, the first configuration information includes at least one of the following:

an index of a beam or a beam set;
an oversampling parameter;
an offset;
beam weight generation information;
usage time corresponding to the beam or the beam set; and
a scanning periodicity corresponding to the beam or the beam set.

In a possible implementation, after receiving the first information, the network device configures some access-side receive beams, so that the access side of the relay device receives the third signal. In other words, the first configuration information includes the index of the beam set or the beam.

In a possible implementation, the at least one first beam configured by using the first configuration information is included in the beam or the beam set that can be determined based on the first information.

For example, the first configuration information includes an index of one or more beam sets, each beam set includes at least one receive beam, quantities of receive beams included in the beam sets may be the same or may be different, and coverage ranges of the beam sets may be the same or may be different.

Alternatively, the first configuration information includes an index of one or more receive beams, and each receive beam may have a different coverage range.

Alternatively, the first configuration information includes one or more indexes corresponding to a receive beam weight. As shown in FIG. 7(b), a value of the index m may be a0, a1, a2, c0, c1, or the like.

Alternatively, the first configuration information includes at least one of the oversampling parameter, the offset, and the weight generation information. In this case, the relay device may determine at least one access-side receive beam based on at least one of the oversampling parameter, the offset, or the weight generation information, to receive the third signal by using the at least one access-side receive beam.

It should be understood that the first information reported by the relay device may enable the network device and the relay device to agree on the correspondence between a beam index and a beam and a correspondence between a beam index and beam weight generation information. Therefore, when the first configuration information includes the beam index, the index corresponding to the beam weight, or the beam weight generation information, the relay device may determine, based on the first configuration information, the at least one access-side receive beam for receiving the third signal.

In a possible implementation, the first configuration information may further include usage time corresponding to the receive beam, and the usage time corresponding to the receive beam is similar to the usage time of the transmit beam. For details, refer to Table 8 and related descriptions of Table 8. Details are not described herein again.

In a possible implementation, the first configuration information may further include a scanning periodicity of the receive beam, and the scanning periodicity corresponding to the receive beam is similar to the scanning periodicity of the transmit beam. For details, refer to the foregoing descriptions of the scanning periodicity of the transmit beam. Details are not described herein again.

In a possible implementation, the first configuration information includes a quantity of types of beams or beam sets, a quantity of beams of each type, and beam information (for example, a receive beam index) of a first-type beam. For details, refer to the foregoing descriptions of the transmit beam. Details are not described herein again.

Optionally, the method 400 further includes:

S403: The relay device receives second configuration information from the network device, where the second configuration information is for forwarding the third signal, and the second configuration information includes at least one of the following:

an amplification multiple (amplification gain) of the third signal, or transmit power of the third signal.

For example, the second configuration information includes an amplification multiple (amplification gain) and/or transmit power. The relay device may forward the third signal to the network device based on the amplification multiple (amplification gain) and/or the transmit power.

Optionally, the first configuration information and/or the second configuration information may be carried on any one of a physical broadcast channel (physical broadcast channel, PBCH), remaining minimum system information (remaining minimum system information, RMSI), a system information block (system information block, SIB) 1, a SIB2, a SIB3, a media access control control element (media access control-control element, MAC-CE), downlink control information (down link control information, DCI), radio resource control (radio resource control, RRC), and system information. This is not limited in this application.

It should be understood that the first configuration information and the second configuration information may be carried in different messages or signaling. When the first configuration information and the second configuration information are carried in different messages or signaling, a sequence of S402 and S403 is not limited in this application. S402 may be performed before S403, or S403 may be performed before S402. Certainly, the first configuration information and the second configuration information may also be carried in a same message or same signaling. This is not limited in this application.

The method 400 further includes the following steps.

S412: The network device measures the third signal from the relay device, to obtain a beam (for example, the at least one first beam, that is, the at least one access-side receive beam) measurement result.

For example, the measurement result may be channel state information. The channel state information may include at least one of the following: an index of one or more resources, a channel quality indicator (channel quality indicator, CQI), reference signal received quality (reference signal received power, RSRP), a precoding matrix indicator (precoding matrix indicator, PMI), a rank indicator (rank indicator, RI), a layer indicator (layer indicator, LI), a channel state information resource index (CSI-RS index, CRI) field, a synchronization/broadcast signal block resource index (synchronization signal/physical broadcast channel block resource index, SSBRI), and the like. This is not limited in this application.

S420: The network device sends the second information to the relay device, where the second information includes information about at least one second beam determined by the network device based on the measurement result of the beam, and at least one beam in the at least one second beam is different from a beam in the at least one first beam. Correspondingly, the relay device receives the second information.

In an uplink signal-based beam management process, the second beam may be a second access-side transmit/receive beam, and at least one beam in at least one second access-side transmit/receive beam is different from a beam in at least one first access-side receive beam.

It should be understood that the beam measurement result is obtained by the network device through measurement based on the first third signal in S412. In addition, before the network device sends the second information to the relay device, the network device determines the at least one second beam (for example, the second access-side receive/transmit beam) based on the measurement result.

For example, the second information may be a beam index of at least one second beam.

For example, the second information may be a coverage range of the at least one second beam, weight generation information, antenna array information, or the like.

It should be understood that before S420, the network device needs to determine the at least one second beam, and the second beam may be a second access-side receive/transmit beam.

A principle used when the network device determines the at least one second access-side receive/transmit beam based on the measurement result may be beam oversampling or beam interpolation.

The network device performs interpolation on the at least one first beam (the access-side receive beam) based on the measurement result obtained through measurement in S412, to determine the at least one second beam (for example, the second access-side receive/transmit beam).

For example, the network device or the relay device determines the at least one second access-side receive/transmit beam through beam interpolation. FIG. 9 is used as an example. The scanning beams (the first access-side receive beam) in S410 are beams b0 and b2. The network device performs interpolation on the beams b0 and b2 based on a measurement result of the scanning beams, to obtain a second access-side receive/transmit beam c1. The beam c1 has better transmission performance than the beams b0 and b2.

For example, the network device determines the at least one second access-side receive/transmit beam through beam interpolation. FIG. 9 is used as an example. The scanning beams (the first access-side receive beam) in S311 are beams a0, a1, and a2. The network device performs interpolation on the beams a0, a1, and a2 based on a measurement result of the scanning beams, to obtain a second access-side receive/transmit beam b0. The beam b0 has better transmission performance than the beams a0, a1, and a2.

For example, as shown in FIG. 11, a horizontal coordinate may be angle information (or a coverage range in the foregoing embodiment), and a vertical coordinate is RSRP. The network device may obtain RSRP of three access-side receive beams (for example, the beams a0, a1, and a2) of the relay device based on the measurement result, and then the network device may perform interpolation based on an angle of the access-side receive beam of the relay device and the RSRP to obtain a second beam (the beam b0). The beam b0 may be used as a second access-side receive/transmit beam.

An interpolation method may be all methods that a continuous function can be interpolated on a basis of discrete data so that the continuous curve passes all given discrete data points. The interpolation method may be, for example, polynomial function interpolation or spline interpolation. This is not limited in this application.

The network device may calculate a good location and corresponding RSRP based on angles of the foregoing three beams, RSRP corresponding to each beam, and an interpolation function. The polynomial function interpolation is used as an example. The network device may first obtain coefficients a, b, and c of a polynomial (for example, $ax^2+bx+c$) based on the foregoing three beams, to determine a peak point of the polynomial and a horizontal coordinate of the peak point. The horizontal coordinate is an angle of the second beam, and a vertical coordinate is RSRP that can be obtained based on the second beam b0. According to such interpolation, a better receive beam (corresponding to higher RSRP) can be obtained with lower scanning overheads. For example, a better beam may be determined from a total of six beams b0 to b5 by scanning only beams a0, a1, and a2. Compared with scanning the beams b0 to b5 one by one, this reduces beam scanning overheads by 50%. In addition, because the beams b0 to b5 have higher beam gains than the beams a0 to a2, signal transmission performance is better.

It should be understood that the foregoing is an interpolation process performed by using a beam and RSRP corresponding to the beam. In addition, an interpolation process may be further performed by using a beam and a normalized gain corresponding to the beam, or interpolation may be performed in another manner, to obtain a good receive/transmit beam. This is not limited in this application.

The network device may further oversample the at least one first access-side receive beam based on the measurement result, to determine the at least one second access-side receive/transmit beam.

For example, the network device determines the at least one second access-side receive/transmit beam through beam oversampling. FIG. 9 is used as an example. The scanning beams (the first access-side receive beam) in step S410 are beams a0 and a1. The network device oversamples the beams a0 and a1 based on a measurement result of the scanning beams, to obtain second access-side receive/transmit beams c0, c2, and c4. Compared with the beams a0 and a1, the beams c0, c2, and c4 have narrower coverage ranges, and the beams c0, c2, and c4 are denser. Therefore, transmission performance is better. Alternatively, the network device or the relay device oversamples the beams a0 and a1 based on the measurement result of the scanning beams, to obtain second beams b0 and b2. Compared with the beams a0 and a1, the beams b0 and b2 have narrower coverage ranges, and therefore have better transmission performance.

In another possible implementation, S420 may be replaced with the following: The network device sends the measurement result (the measurement result obtained through measurement in step S412) to the relay device, where the measurement result includes the channel state information. Correspondingly, the relay device receives the measurement result.

The relay device determines the at least one second access side receive/transmit beam based on the measurement result, and a principle for determining the at least one second access side receive/transmit beam may be beam oversampling or beam interpolation.

Specifically, for a method for determining, by the relay device, the at least one second access side receive/transmit beam based on the beam oversampling or the beam interpolation, refer to the foregoing method for determining, by the network device, the at least one second access side receive/transmit beam based on the beam oversampling or the beam interpolation. Details are not described herein again.

The method 400 further includes the following steps.

S430 and S431: A terminal device sends a fourth signal to a network device, and the relay device assists in sending the fourth signal. Correspondingly, the relay device receives the fourth signal by using the at least one second beam, and forwards the fourth signal to the network device by using a backhaul-side transmit beam. The at least one second beam is determined based on a measurement result of a beam (for example, the at least one first beam), and at least one beam in the at least one second beam is different from a beam in the at least one first beam. Correspondingly, the network device receives the fourth signal.

For example, in a beam management process based on an uplink reference signal, the second beam is a second access-side receive/transmit beam.

In a possible implementation, the fourth signal in this embodiment of this application is a second uplink signal, for example, an uplink reference signal, and is for channel estimation, auxiliary signal demodulation, detection, or the like.

For example, the uplink reference signal may include a DMRS, a PRACH, a TRS, an SRS, or the like. This is not limited in this application.

It should be understood that, if the fourth signal is an uplink reference signal, the fourth signal may be for measuring the at least one second beam, to obtain at least one third beam with higher transmission performance. At least one beam in the at least one third beam is different from a beam in the at least one second beam, or at least one beam in the at least one third beam is different from a beam in the at least one first beam. For a process in which the relay device or the network device measures the at least one second beam to obtain the at least one third beam, refer to the foregoing process in which the at least one first beam is measured to obtain the at least one second beam. Details are not described herein again. A beam measurement process may be repeated for a plurality of times until the network device or the relay device determines a beam that can be for transmitting data.

In a possible implementation, the fourth signal in this embodiment of this application is uplink data, a PUSCH signal, or a physical uplink control channel (physical uplink control channel, PUCCH) signal.

It should be understood that, if the fourth signal is uplink data, a PUSCH signal, or a PUCCH signal, it may indicate that the at least one second beam is a beam that has good transmission performance and that is determined by the network device or the relay device and applicable to data transmission.

In a possible implementation, steps S430 and S431 may be replaced with the following: The network device sends a fourth signal to the terminal device, and the relay device assists in sending the fourth signal. Correspondingly, the relay device receives the fourth signal by using a backhaul-side receive beam, and forwards the fourth signal to the terminal device by using at least one second beam. The at least one second beam is determined based on a measurement result of a beam (for example, the at least one first beam), and at least one beam in the at least one second beam is different from a beam in the at least one first beam. Correspondingly, the terminal device receives the fourth signal. In other words, the relay uses the at least one second beam to assist the network device in downlink transmission.

It should be understood that the fourth signal is a downlink signal, and may be a downlink reference signal, a downlink data signal, or a downlink control signal.

Optionally, the backhaul-side transmit beam is the same as a backhaul-side receive beam.

Optionally, the access-side receive beam is the same as the access-side transmit beam. To be specific, the at least one second beam in the beam management process based on the uplink reference signal may be the same as at least one second beam in a beam management process based on a downlink reference signal, and/or the at least one first beam in the beam management process based on the uplink reference signal may be the same as at least one first beam in the beam management process based on the downlink reference signal.

Optionally, the access-side receive beam is the same as the access-side transmit beam. In other words, the at least one second beam obtained through measurement by using the at least one first beam may be a receive beam, or may be a transmit beam.

For example, that the access-side transmit beam is the same as the access-side receive beam may be understood as that a spatial transmit parameter corresponding to the access-side transmit beam is the same as a spatial receive parameter corresponding to the access-side receive beam.

It should be understood that steps S430 and S431 may be performed simultaneously.

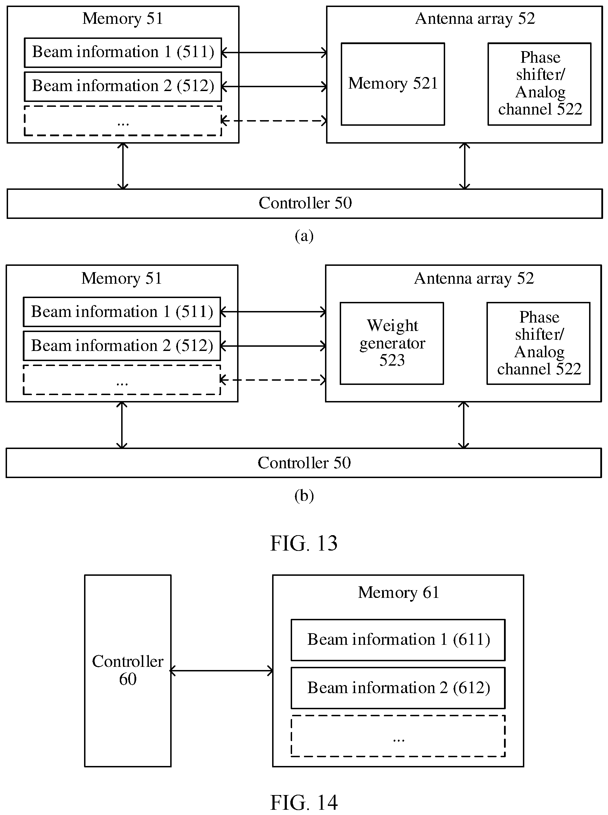

FIG. 13 is a schematic of a partial structure of a relay device according to an embodiment of this application.

FIG. 13(a) shows a controller 50, a memory 51, and an antenna array 52, where the antenna array 52 includes a memory 521 and a phase shifter/analog channel 522.

It should be understood that, in the foregoing methods 300 and 400, the first information reported by the relay device to the network device in step S301 or step S401 may enable the network device and the relay device to agree on a correspondence between a beam index and a beam, and a correspondence between a beam index and beam weight generation information.

Based on the foregoing correspondence, a beam/beam set index and beam information corresponding to the beam/beam set index (for example, the beam information is at least one of QCL information, a coverage range, a weight generation manner, a weight, or a weight index, which is not limited in this application) may be stored on both the network device and the relay device.

For example, the memory 51 includes a plurality of groups of beam information, including beam information 1 (stored in a storage subunit 511), beam information 2 (stored in a storage subunit 512), and other beam information that is not shown in the figure. Each group of beam information separately corresponds to one group of relay access-side beam sets or one group of relay access-side beams. The controller 50 is configured to: determine beam information, and apply a beam weight corresponding to the beam information to the antenna array 52.

The beam weighted value may be classified into a digital weight and an analog weight. The digital weight is for acting on a digital channel (not shown in the figure), and the analog weight is for acting on a phase shifter 522. Because there is a specific delay from configuration to becoming effective of the analog weight, the weight may be configured in advance. To be specific, the antenna array 52 includes the memory 521, and the memory 521 may be understood as an intermediate radio frequency memory. When an access side of the relay device needs to change a beam (for example, during beam scanning), an analog weight of the beam may be configured in the memory 521 in advance, so that the analog weight takes effect at exact time, so that a beam switching speed can be faster.

In a possible implementation, the memory 51 stores a mapping table between each access-side beam index of the relay device and an analog beam index. If there is a digital weight, the memory 51 further stores a mapping table between each access-side beam index and a digital beam index. The memory 521 stores a mapping table between an analog beam index and an analog weight, or the memory 521 further stores a mapping table between a digital beam index and a digital weight. That is, if the controller 50 determines an access-side beam index, the controller determines, according to the mapping tables, an analog weight and a digital weight that correspond to the access-side beam index, and applies the analog weight and the digital weight to the antenna array 52.

A difference between FIG. 13(b) and FIG. 13(a) lies in that the memory 521 is replaced with a weight generator 523. That is, in FIG. 13(b), a weight of a phase shifter/an analog channel is determined by the weight generator 523.

In a possible implementation, the memory 51 stores a mapping table between each access-side beam index of the relay device and an analog beam index (and/or weight generation information). If there is a digital weight, the memory 51 further stores a mapping table between each access-side beam index of the relay device and a digital beam index (and/or weight generation information). The weight generator 523 may calculate an analog weight based on the analog beam index (and/or the weight generation information). Alternatively, the weight generator 523 may calculate a digital weight based on the digital beam index (and/or the weight generation information). That is, if the controller 50 determines an access-side beam index, the weight generator 523 obtains, through calculation according to the mapping tables, an analog weight and a digital weight that correspond to the access-side beam, and applies the analog weight and the digital weight to the antenna array 52.

FIG. 13(a) is used as an example. The storage subunit 511 may store information about beams a0, a1, ..., ai-1, and the like, and the storage subunit 511 may store information about beams b0, b1, ..., bi-1, and the like, and so on.

With reference to step S302 or S402 in the method 300 or the method 400, the network device configures first configuration information for the relay device at time t, and the relay device obtains, from the storage subunit 511 of the memory 51 at time t0-$\Delta$ before t0, where $\Delta>0$, weights (including analog weights and/or digital weights) corresponding to the beam a0, the beam a2, and the like, and configures the weights in the memory 521. The time t is earlier than the time t0 (or the time t0-$\Delta$). At the time t0, the access side of the relay device sends or receives a signal by using beams corresponding to the weights.

Further, with reference to step S320 or S420 in the method 300 or the method 400, the network device configures the first configuration information for the relay device at time t', and the relay device obtains, from the storage subunit 512 of the memory 51 at time t1-$\Delta$1 before t1, where $\Delta1>0$, a weight (including an analog weight and/or a digital weight) corresponding to the beam b0, and configures the weight in the memory 521. The time t' is earlier than the time t1 (or the time t1-$\Delta$1). At the time t1, the access side of the relay device sends or receives a signal by using beams corresponding to the weights.

It should be understood that a quantity of groups of beam information stored in the memory 51 and a quantity of groups of beam information stored in each beam information unit are not limited in this application.

FIG. 14 is a schematic of a partial structure of a network device according to an embodiment of this application.

FIG. 14 shows a controller 60 and a memory 61. The memory 61 includes a plurality of groups of beam information (corresponding to beam information stored on a relay device side), including beam information 1 (stored in a storage subunit 611), beam information 2 (stored in a storage subunit 612), and other beam information that is not shown in the figure. Each group of beam information separately corresponds to one group of relay access-side beam sets or one group of relay access-side beams. The controller 60 is configured to: determine beam information, and apply beam information corresponding to the beam information to an antenna array.

It should be understood that a quantity of groups of beam information stored in the memory 61 and a quantity of groups of beam information stored in each beam information unit are not limited in this application.

It should be understood that the steps shown in dashed lines in the flowchart of FIG. 3 or FIG. 12 are optional steps, and a sequence of the steps is determined based on internal logic of the method. Sequence numbers shown in FIG. 3 or FIG. 12 are merely examples, and do not limit a sequence of the steps in this application.

It should be further understood that the methods provided in embodiments of this application may be used independently or in combination. Various implementations provided in embodiments of this application may be used independently or in combination. This is not limited in this application.

It should be understood that the term "and/or" in this application describes only an association relationship between associated objects and represents that three relationships may exist. For example, A and/or B may represent the following three cases: Both A and B exist, only A exists, and only B exists, where A and B may be singular or plural. In addition, the character "/" in this specification usually indicates an "or" relationship between associated objects, but may also indicate an "and/or" relationship. For details, refer to the context for understanding.

In this application, "at least one item (piece)" means one or more items (pieces), and "at least two items (pieces)" and "a plurality of items (pieces)" mean two or more items (pieces). "At least one of the following items (pieces)" or a similar expression thereof means any combination of these items, including any combination of singular items (pieces) or plural items (pieces). For example, at least one of a, b, or c may represent: a, b, c, a-b, a-c, b-c, or a-b-c, where a, b, and c may be singular or plural.

It should be noted that the execution body shown in FIG. 3 or FIG. 12 is merely an example, and the execution body may be a chip, a chip system, or a processor that supports the execution body in implementing the method shown in FIG. 3 or FIG. 12. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that in the foregoing method embodiments, methods and operations implemented by the relay device may alternatively be implemented by a component (for example, a chip or a circuit) that may be used in the relay device, and methods and operations implemented by the network device may alternatively be implemented by a component (for example, a chip or a circuit) that may be used in the network device.

The foregoing mainly describes the solutions provided in embodiments of this application from a perspective of interaction between network elements. It may be understood that, to implement the foregoing functions, each network element such as a transmitting-end device or a receiving-end device includes a corresponding hardware structure and/or software module for performing each function. A person skilled in the art may be aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmitting-end device or the receiving-end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

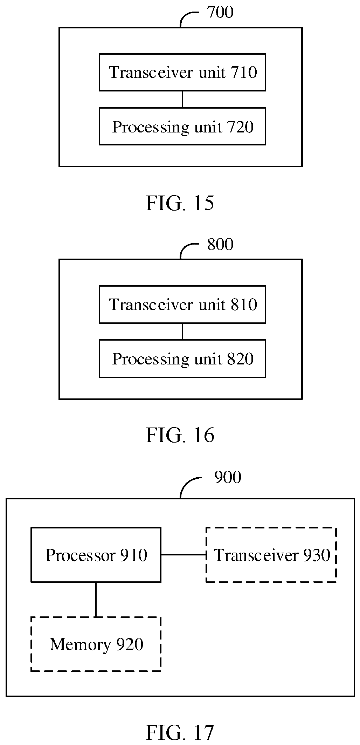

FIG. 15 is a schematic block diagram of a communication apparatus according to an embodiment of this application. The communication apparatus 700 shown in FIG. 15 may be configured to perform actions performed by the relay device in the foregoing method embodiment (the method 300 or the method 400). The communication apparatus 700 includes a transceiver unit 710 and a processing unit 720. The transceiver unit 710 may communicate with the outside, and the processing unit 720 is configured to process data. The transceiver unit 710 may also be referred to as a communication interface or a communication unit.

Optionally, the communication apparatus 700 may further include a storage unit. The storage unit may be configured to store instructions and/or data. The processing unit 720 may read the instructions and/or the data in the storage unit.

In a design, the communication apparatus 700 may be a relay device. The transceiver unit 710 is configured to perform a receiving or sending operation of the relay device in the foregoing method embodiments, and the processing unit 720 is configured to perform an internal processing operation of the relay device in the foregoing method embodiments.

Optionally, the transceiver unit 710 may include a sending unit and a receiving unit. The sending unit is configured to perform a sending operation in the foregoing method embodiments. The receiving unit is configured to perform a receiving operation in the foregoing method embodiments.

It should be noted that the communication apparatus 700 may include a sending unit, but does not include a receiving unit. Alternatively, the communication apparatus 700 may include a receiving unit, but does not include a sending unit. This may be specifically determined depending on whether the foregoing solution performed by the communication apparatus 700 includes a sending action and a receiving action.

In another design, the communication apparatus 700 may be a device including a relay device. Alternatively, the communication apparatus 700 may be a component disposed in the relay device, for example, a chip in the relay device. In this case, the transceiver unit 710 may be an interface circuit, a pin, or the like. Specifically, the interface circuit may include an input circuit and an output circuit, and the processing unit 720 may include a processing circuit.

In a possible implementation, the transceiver unit 710 is configured to: receive a first signal from a network device, and forward and transmit the first signal to a terminal device by using at least one first beam, where the first signal is for beam measurement. The transceiver unit performs transmission of a second signal with the terminal device by using at least one second beam, where the at least one second beam is determined based on a beam measurement result, and at least one beam in the at least one second beam is different from a beam in the at least one first beam.

In a possible implementation, the transceiver unit 710 is configured to receive a third signal from a terminal device by using at least one first beam, and forward the third signal to a network device, where the third signal is for beam measurement. The transceiver unit 710 performs transmission of a fourth signal with the terminal device by using at least one second beam, where the at least one second beam is determined based on a beam measurement result, and at least one beam in the at least one second beam is different from a beam in the at least one first beam.

In a possible implementation, the transceiver unit 710 is further configured to send first information to the network device, where the first information is for determining a beam set, and beams in the beam set are for communication between the relay device and the terminal device.

In a possible implementation, the transceiver unit 710 is further configured to receive first configuration information from the network device, where the first configuration information includes information about the at least one first beam.

In a possible implementation, the first information includes at least one of the following: quantity information of beams or beam sets, quasi co-location information of the beams or the beam sets, coverage range information of the beams or the beam sets, a relative relationship between the beams or the beam sets, antenna array information, and weight generation information.

In a possible implementation, the first configuration information includes at least one of the following: an index of a beam or a beam set, an oversampling parameter, an offset, beam weight generation information, usage time corresponding to the beam or the beam set, and a scanning periodicity corresponding to the beam or the beam set.

In a possible implementation, the transceiver unit 710 is further configured to receive second configuration information from the network device, where the second configuration information is for forwarding the first signal or the third signal, and the second configuration information includes at least one of the following: an amplification multiple of the first signal or the third signal and a transmit power of the first signal or the third signal.

In a possible implementation, beams in the beam set include a plurality of types of beams, where different types of beams are for forwarding different channels or services.

In a possible implementation, the processing unit 720 is configured to determine the at least one second beam before the apparatus performs transmission of the second signal with the terminal device by using the at least one second beam.

In a possible implementation, the transceiver unit 710 is further configured to obtain a beam measurement result from the network device. The processing unit 720 is further configured to determine the at least one second beam based on the measurement result.

In a possible implementation, the transceiver unit 710 is further configured to receive second information from the network device, where the second information includes information about the at least one second beam determined by the network device based on the beam measurement result.

FIG. 16 is a block diagram of a communication apparatus according to an embodiment of this application. The communication apparatus 800 shown in FIG. 16 may be configured to perform actions performed by the network device in the foregoing method embodiment (the method 300 or the method 400). The communication apparatus 800 includes a transceiver unit 810 and a processing unit 820. The transceiver unit 810 may communicate with the outside, and the processing unit 820 is configured to process data. The transceiver unit 810 may also be referred to as a communication interface or a communication unit.

Optionally, the communication apparatus 800 may further include a storage unit. The storage unit may be configured to store instructions and/or data. The processing unit 820 may read the instructions and/or the data in the storage unit.

In a design, the communication apparatus 800 may be a network device. The transceiver unit 810 is configured to perform a receiving or sending operation of the network device in the foregoing method embodiments, and the processing unit 820 is configured to perform an internal processing operation of the network device in the foregoing method embodiments.

Optionally, the transceiver unit 810 may include a sending unit and a receiving unit. The sending unit is configured to perform a sending operation in the foregoing method embodiments. The receiving unit is configured to perform a receiving operation in the foregoing method embodiments.

It should be noted that the communication apparatus 800 may include a sending unit, but does not include a receiving unit. Alternatively, the communication apparatus 800 may include a receiving unit, but does not include a sending unit. This may be specifically determined depending on whether the foregoing solution performed by the communication apparatus 800 includes a sending action and a receiving action.

In another design, the communication apparatus 800 may be a device including a network device. Alternatively, the communication apparatus 800 may be a component disposed in the network device, for example, a chip in the network device. In this case, the transceiver unit 810 may be an interface circuit, a pin, or the like. Specifically, the interface circuit may include an input circuit and an output circuit, and the processing unit 820 may include a processing circuit.

In a possible implementation, the transceiver unit 810 is configured to send a first signal to a relay device, where the first signal is for beam measurement. The transceiver unit 810 is further configured to: receive a beam measurement result from the relay device, and determine at least one second beam based on the measurement result, where the at least one second beam is for transmitting a second signal between the relay device and a terminal device, at least one beam in the at least one second beam is different from a beam in at least one first beam, and the at least one first beam is used by the relay device to forward the first signal to the terminal device.

In a possible implementation, the transceiver unit 810 is configured to receive a third signal from a relay device, where the third signal is for beam measurement. The processing unit 820 is configured to: determine a beam measurement result; and determine at least one second beam based on the measurement result, where the at least one second beam is for transmitting a fourth signal between the relay device and a terminal device, at least one beam in the at least one second beam is different from a beam in at least one first beam, and the at least one first beam is used by the relay device to receive the third signal from the terminal device.

In a possible implementation, the transceiver unit 810 is further configured to receive first information from the relay device, where the first information is for determining a beam set, and beams in the beam set are beams for communication between the relay device and the terminal device.

In a possible implementation, the transceiver unit 810 is further configured to send first configuration information to the relay device, where the first configuration information includes information about the at least one first beam.

In a possible implementation, the first information includes at least one of the following: quantity information of beams/beam sets, quasi co-location information of the beams/the beam sets, coverage range information of the beams/the beam sets, a relative relationship between the beams or the beam sets, antenna array information, and weight generation information.

In a possible implementation, the first configuration information includes at least one of the following: an index of a beam or a beam set, an oversampling parameter, an offset, beam weight generation information, usage time corresponding to the beam or the beam set, and a scanning periodicity corresponding to the beam or the beam set.

In a possible implementation, the transceiver unit 810 is further configured to send second configuration information to the relay device, where the second configuration information is for forwarding the first signal or the third signal, and the second configuration information includes at least one of the following: an amplification multiple of the first signal or the third signal and a transmit power of the first signal or the third signal.

In a possible implementation, beams in the beam set include a plurality of types of beams, where different types of beams are for forwarding different channels or services.

In a possible implementation, the transceiver unit 810 is further configured to send second information to the relay device, where the second information includes information about the at least one second beam determined by the processing unit based on the beam measurement result.

In a possible implementation, the processing unit 820 is further configured to perform interpolation or oversampling on the at least one first beam based on the measurement result to obtain the at least one second beam.

As shown in FIG. 17, an embodiment of this application further provides a communication apparatus 900. The communication apparatus 900 includes a processor 910. The processor 910 is coupled to a memory 920. The memory 920 is configured to store a computer program or instructions and/or data. The processor 910 is configured to execute the computer program or the instructions and/or the data stored in the memory 920, so that the method 300 or 400 in the foregoing method embodiments is performed.

In a possible implementation, the communication apparatus 900 includes a processor 910, and the processor 910 is configured to implement an operation performed inside the relay device in the foregoing method 300 or 400.

Optionally, the communication apparatus 900 includes one or more processors 910.

Optionally, as shown in FIG. 17, the communication apparatus 900 may further include the memory 920.

Optionally, the communication apparatus 900 may include one or more memories 920.

Optionally, the memory 920 and the processor 910 may be integrated together or separately disposed.

Optionally, as shown in FIG. 17, the communication apparatus 900 may further include one or more transceivers 930 and/or communication interfaces. The transceiver 930 and/or the communication interface are/is configured to receive and/or send a signal. For example, the processor 910 is configured to control the transceiver 930 and/or the communication interface to receive and/or send a signal.

Optionally, a component for implementing a receiving function in the transceiver 930 may be considered as a receiving module, and a component for implementing a sending function in the transceiver 930 may be considered as a sending module. That is, the transceiver 930 includes the receiver and the transmitter. The transceiver may also be sometimes referred to as a transceiver machine, a transceiver module, a transceiver circuit, or the like. The receiver may also be sometimes referred to as a receiver machine, a receiving module, a receiving circuit, or the like. The transmitter may also be sometimes referred to as a transmitter machine, a transmitting module, a transmitting circuit, or the like.

Optionally, the communication apparatus 900 may further include one or more signal amplifiers. If there are a plurality of signal amplifiers, different signal amplifiers correspond to different polarization directions or relay radio frequency channels. In uplink communication, a signal amplifier is configured to amplify a signal received from a terminal device. In downlink communication, a signal amplifier is configured to amplify a signal received from a network device.

In a solution, the communication apparatus 900 is configured to implement operations performed by the relay device in the foregoing method embodiments. For example, the processor 910 is configured to implement an operation performed inside the relay device in the foregoing method embodiments, and the transceiver 930 is configured to implement a receiving or sending operation performed by the relay device in the foregoing method embodiment (the method 300 or 400) (for example, the receiving or sending operation performed by the relay device in steps S301, S302, S303, S310, S311, S313, S314, S320, S330, and S331, or the receiving or sending operation performed by the relay device in steps S401, S402, S403, S410, S411, S420, S430, and S431). The processing unit 720 in the apparatus 700 may be the processor in FIG. 17, and the transceiver unit 710 may be the transceiver in FIG. 17. For specific operations performed by the processor 910, refer to the foregoing descriptions of the processing unit 720. For operations performed by the transceiver 930, refer to the descriptions of the transceiver unit 710. Details are not described herein again. For operations performed by the memory 920, refer to descriptions of the memory 51 and/or the memory 521. For operations performed by the transceiver 930, refer to descriptions of the antenna array 52. Details are not described herein again.

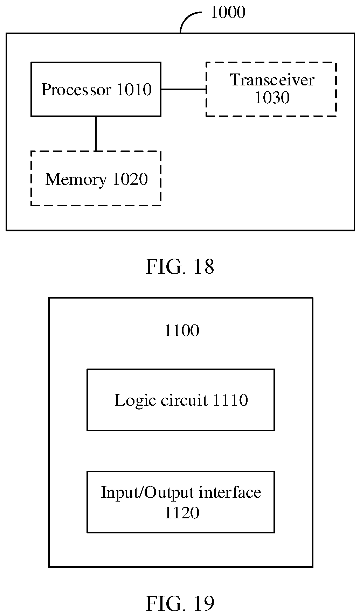

As shown in FIG. 18, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method 300 or 400 in the foregoing method embodiments is performed.

In a possible implementation, the communication apparatus 1000 includes a processor 1010, and the processor 1010 is configured to implement an operation performed inside the network device in the foregoing method 300 or 400.

Optionally, the communication apparatus 1000 includes one or more processors 1010.

Optionally, as shown in FIG. 18, the communication apparatus 1000 may further include the memory 1020.

Optionally, the communication apparatus 1000 may include one or more memories 1020.

Optionally, the memory 1020 and the processor 1010 may be integrated together or separately disposed.

Optionally, as shown in FIG. 18, the communication apparatus 1000 may further include one or more transceivers 1030 and/or communication interfaces. The transceiver 1030 and/or the communication interface are/is configured to receive and/or send a signal. For example, the processor 1010 is configured to control the transceiver 1030 to receive and/or send the signal.

Optionally, a component for implementing a receiving function in the transceiver 1030 may be considered as a receiving module, and a component for implementing a sending function in the transceiver 1030 may be considered as a sending module. That is, the transceiver 1030 includes the receiver and the transmitter. The transceiver may also be sometimes referred to as a transceiver machine, a transceiver module, a transceiver circuit, or the like. The receiver may also be sometimes referred to as a receiver machine, a receiving module, a receiving circuit, or the like. The transmitter may also be sometimes referred to as a transmitter machine, a transmitting module, a transmitting circuit, or the like.

In a solution, the communication apparatus 1000 is configured to implement operations performed by the network device in the foregoing method embodiments.

For example, the processor 1010 is configured to implement an operation (for example, the operation performed inside the network device in step S412) performed inside the network device in the foregoing method embodiments, and the transceiver 1030 is configured to implement a receiving or sending operation (for example, the receiving or sending operation performed by the network device in steps S301, S302, S303, S310, S314, S320, and S330, or the receiving or sending operation performed by the network device in steps S401, S402, S403, S411, S420, and S430) performed by the network device in the foregoing method embodiments. The processing unit 820 in the apparatus 800 may be the processor in FIG. 18, and the transceiver unit 810 may be the transceiver and/or the communication interface in FIG. 18. For specific operations performed by the processor 1010, refer to the foregoing descriptions of the processing unit 820. For operations performed by the transceiver 1030, refer to the descriptions of the transceiver unit 810. Details are not described herein again. For an operation performed by the memory 920, refer to the descriptions of the memory 61. Details are not described herein again. An embodiment of this application further provides a communication apparatus, including a processor. The processor is coupled to an input/output interface, and data is transmitted through the input/output interface. The processor is configured to perform the method in any one of the foregoing method embodiments.

As shown in FIG. 19, an embodiment of this application further provides a communication apparatus 1100. The communication apparatus 1100 includes a logic circuit 1110 and an input/output interface (input/output interface) 1120.

The logic circuit 1110 may be a processing circuit in the communication apparatus 1100. The logic circuit 1110 may be coupled to a storage unit, and invoke instructions in the storage unit, so that the communication apparatus 1100 can implement the methods and functions in embodiments of this application. The input/output interface 1120 may be an input/output circuit in the communication apparatus 1100, and outputs information processed by the communication apparatus 1100, or inputs to-be-processed data or signaling information to the communication apparatus 1100 for processing.

In a solution, the communication apparatus 1100 is configured to implement operations performed by the relay device in the foregoing method embodiments.

For example, the logic circuit 1110 is configured to implement a processing-related operation performed by the relay device in the foregoing method embodiments, for example, the processing-related operation performed by the relay device in the embodiment shown in FIG. 3 or FIG. 12. The input/output interface 1120 is configured to implement a sending-related and/or receiving-related operation performed by the relay device in the foregoing method embodiments, for example, the sending-related and/or receiving-related operation performed by the relay device in the embodiment shown in FIG. 3 or FIG. 12 (for example, the receiving or sending operation performed by the relay device in steps S301, S302, S303, S310, S311, S313, S314, S320, S330, and S331, or the receiving or sending operation performed by the relay device in steps S401, S402, S403, S410, S411, S420, S430, and S431). For specific operations performed by the logic circuit 1110, refer to the foregoing descriptions of the processing unit 720. For operations performed by the input/output interface 1120, refer to the foregoing descriptions of the transceiver unit 710. Details are not described herein again.

In another solution, the communication apparatus 1100 is configured to implement operations performed by the network device in the foregoing method embodiments.

For example, the logic circuit 1110 is configured to implement a processing-related operation performed by the network device in the foregoing method embodiments, for example, the processing-related operation (for example, the operation performed inside the network device in step S412) performed by the network device in the embodiment shown in FIG. 3 or FIG. 12. The input/output interface 1120 is configured to implement a sending-related and/or receiving-related operation performed by the network device in the foregoing method embodiments, for example, the sending-related and/or receiving-related operation (for example, the receiving or sending operation performed by the network device in steps S301, S302, S303, S310, S314, S320, and S330, or the receiving or sending operation performed by the network device in steps S401, S402, S403, S411, S420, and S430) performed by the network device in the embodiment shown in FIG. 3 or FIG. 12. For specific operations performed by the logic circuit 1110, refer to the foregoing descriptions of the processing unit 820. For operations performed by the input/output interface 1120, refer to the foregoing descriptions of the transceiver unit 810. Details are not described herein again.

It should be understood that the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the methods provided in embodiments of this application, this application further provides a computer-readable medium. The computer-readable medium stores program code. When the program code is run on a computer, the computer is enabled to perform the method in the embodiment shown in FIG. 3 or FIG. 11. For example, when the computer program is executed by the computer, the computer can implement the method performed by the network device or the method performed by the relay device in the foregoing method embodiments.

An embodiment of this application further provides a computer program product including instructions. When the instructions are executed by a computer, the computer is enabled to implement the method performed by the network device or the method performed by the relay device in the foregoing method embodiments.

An embodiment of this application further provides a communication system. The communication system includes a network device and a relay device. The network device is configured to implement the method performed by the network device in the foregoing method embodiments, and the relay device is configured to implement the method performed by the relay device in the foregoing method embodiments.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

The network device and the relay device in the foregoing apparatus embodiments correspond to the network device and the relay device in the method embodiments. A corresponding module or unit performs a corresponding step. For example, the communication unit (the transceiver) performs a receiving step or a sending step in the method embodiments, and the processing unit (the processor) may perform a step other than the sending step and the receiving step. For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, with reference to units and algorithm steps in the examples described in embodiments disclosed in this specification, the functions may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A beam management method, comprising:

   receiving, by a relay device, a first signal from a network device;
   forwarding, by the relay device, the first signal to a terminal device by using at least one first beam, wherein the first signal is for beam measurement; and
   performing, by the relay device, transmission of a second signal with the terminal device by using at least one second beam, wherein the at least one second beam is determined based on a beam measurement result, and at least one beam in the at least one second beam is different from a beam in the at least one first beam.

2. A beam management method, comprising:

   receiving, by a relay device, a third signal from a terminal device by using at least one first beam;
   forwarding, by the relay device, the third signal to a network device, wherein the third signal is for beam measurement; and
   performing, by the relay device, transmission of a fourth signal with the terminal device by using at least one second beam, wherein the at least one second beam is determined based on a beam measurement result, and at least one beam in the at least one second beam is different from a beam in the at least one first beam.

3. The method according to claim 1 or 2, wherein the method further comprises:

   receiving, by the relay device, a beam measurement result from the network device; and
   determining, by the relay device, the at least one second beam based on the measurement result.

4. The method according to claim 1 or 2, wherein the method further comprises:
receiving, by the relay device, second information from the network device, wherein the second information comprises information about the at least one second beam determined by the network device based on the beam measurement result.

5. The method according to any one of claims 1 to 4, wherein the method further comprises:
receiving, by the relay device, first configuration information from the network device, wherein the first configuration information comprises information about the at least one first beam.

6. The method according to any one of claims 1 to 5, wherein the method further comprises:
sending, by the relay device, first information to the network device, wherein the first information is for determining a beam set, beams in the beam set are for communication between the terminal device and the relay device, and the beam set comprises the at least one first beam.

7. The method according to claim 6, wherein the beams in the beam set comprise a plurality of types of beams, wherein different types of beams are for forwarding different channels or services.

8. A beam management method, comprising:

   sending, by a network device, a first signal to a relay device, wherein the first signal is for beam measurement;
   receiving, by the network device, a beam measurement result from the relay device; and
   determining, by the network device, at least one second beam based on the measurement result, wherein the at least one second beam is for transmitting a second signal between the relay device and a terminal device, at least one beam in the at least one second beam is different from a beam in at least one first beam, and the at least one first beam is used by the relay device to forward the first signal to the terminal device.

9. A beam management method, comprising:

   receiving, by a network device, a third signal from a relay device, wherein the third signal is for beam measurement;
   determining, by the network device, a beam measurement result; and
   determining, by the network device, at least one second beam based on the measurement result, wherein the at least one second beam is for transmitting a fourth signal between the relay device and a terminal device, at least one beam in the at least one second beam is different from a beam in at least one first beam, and the at least one first beam is used by the relay device to receive the third signal from the terminal device.

10. The method according to claim 8 or 9, wherein the method further comprises:
sending, by the network device, second information to the relay device, wherein the second information comprises information about the at least one second beam determined by the network device based on the measurement result.

11. The method according to any one of claims 8 to 10, wherein the method further comprises:
sending, by the network device, first configuration information to the relay device, wherein the first configuration information comprises information about the at least one first beam.

12. The method according to any one of claims 8 to 11, wherein the method further comprises:
receiving, by the network device, first information from the relay device, wherein the first information is for determining a beam set, beams in the beam set are for communication between the terminal device and the relay device, and the beam set comprises the at least one first beam.

13. The method according to claim 12, wherein the beams in the beam set comprise a plurality of types of beams, wherein different types of beams are for forwarding different channels or services.

14. The method according to any one of claims 6, 7, 12, and 13, wherein the first information comprises at least one of the following:

   quantity information of beams/beam sets;
   quasi co-location information of the beams/the beam sets;
   coverage range information of the beams/the beam sets;

a relative relationship between the beams or the beam sets;
antenna array information; and
weight generation information.

15. The method according to any one of claims 5 to 7 or 11 to 14, wherein the first configuration information comprises at least one of the following:

   an index of a beam or a beam set;
   an oversampling parameter;
   an offset;
   beam weight generation information;
   usage time corresponding to the beam or the beam set; and
   a scanning periodicity corresponding to the beam or the beam set.

16. A communication apparatus, wherein the apparatus comprises a transceiver unit, and the transceiver unit comprises a sending unit and a receiving unit, wherein

   the receiving unit is configured to receive a first signal from a network device;
   the sending unit is configured to forward the first signal to a terminal device by using at least one first beam, wherein the first signal is for beam measurement; and
   the transceiver unit performs transmission of a second signal with the terminal device by using at least one second beam, wherein the at least one second beam is determined based on a beam measurement result, and at least one beam in the at least one second beam is different from a beam in the at least one first beam.

17. A communication apparatus, wherein the apparatus comprises a transceiver unit, and the transceiver unit comprises a sending unit and a receiving unit, wherein

   the receiving unit is configured to receive a third signal from a terminal device by using at least one first beam;
   the sending unit is configured to forward the third signal to a network device, wherein the third signal is for beam measurement; and
   the transceiver unit performs transmission of a fourth signal with the terminal device by using at least one second beam, wherein the at least one second beam is determined based on a beam measurement result, and at least one beam in the at least one second beam is different from a beam in the at least one first beam.

18. The apparatus according to claim 16 or 17, wherein the apparatus further comprises a processing unit;

   the receiving unit is further configured to receive a beam measurement result from the network device; and
   the processing unit is configured to determine the at least one second beam based on the measurement result.

19. The apparatus according to claim 16 or 17, wherein
   the receiving unit is further configured to receive second information from the network device, wherein the second information comprises information about the at least one second beam determined by the network device based on the beam measurement result.

20. The apparatus according to any one of claims 16 to 19, wherein
   the receiving unit is further configured to receive first configuration information from the network device, wherein the first configuration information comprises information about the at least one first beam.

21. The apparatus according to any one of claims 16 to 20, wherein
   the sending unit is further configured to send first information to the network device, wherein the first information is for determining a beam set, beams in the beam set are for communication between the terminal device and the relay device, and the beam set comprises the at least one first beam.

22. The apparatus according to claim 21, wherein the beams in the beam set comprise a plurality of types of beams, wherein different types of beams are for forwarding different channels or services.

23. A communication apparatus, wherein the apparatus comprises a transceiver unit and a processing unit, wherein

the transceiver unit is configured to send a first signal to a relay device, wherein the first signal is for beam measurement;

the transceiver unit is further configured to receive a beam measurement result from the relay device; and

the processing unit is configured to determine at least one second beam based on the measurement result, wherein the at least one second beam is for transmitting a second signal between the relay device and a terminal device, at least one beam in the at least one second beam is different from a beam in at least one first beam, and the at least one first beam is used by the relay device to forward the first signal to the terminal device.

24. A communication apparatus, wherein the apparatus comprises a transceiver unit and a processing unit, wherein

the transceiver unit is configured to receive a third signal from a relay device, wherein the third signal is for beam measurement;

the processing unit is configured to determine a beam measurement result; and

the processing unit is further configured to determine at least one second beam based on the measurement result, wherein the at least one second beam is for transmitting a fourth signal between the relay device and a terminal device, at least one beam in the at least one second beam is different from a beam in at least one first beam, and the at least one first beam is used by the relay device to receive the third signal from the terminal device.

25. The apparatus according to claim 23 or 24, wherein

the transceiver unit is further configured to send second information to the relay device, wherein the second information comprises information about the at least one second beam determined by the network device based on the measurement result.

26. The apparatus according to any one of claims 23 to 25, wherein

the transceiver unit is further configured to send first configuration information to the relay device, wherein the first configuration information comprises information about the at least one first beam.

27. The apparatus according to any one of claims 23 to 26, wherein

the transceiver unit is further configured to receive first information from the relay device, wherein the first information is for determining a beam set, beams in the beam set are for communication between the terminal device and the relay device, and the beam set comprises the at least one first beam.

28. The apparatus according to claim 27, wherein the beams in the beam set comprise a plurality of types of beams, wherein different types of beams are for forwarding different channels or services.

29. The apparatus according to any one of claims 21, 22, 27, and 28, wherein the first information comprises at least one of the following:

quantity information of beams/beam sets;
quasi co-location information of the beams/the beam sets;
coverage range information of the beams/the beam sets;
a relative relationship between the beams or the beam sets;
antenna array information; and
weight generation information.

30. The apparatus according to any one of claims 20 to 22 or 26 to 29, wherein the first configuration information comprises at least one of the following:

an index of a beam or a beam set;
an oversampling parameter;
an offset;
beam weight generation information;
usage time corresponding to the beam or the beam set; and
a scanning periodicity corresponding to the beam or the beam set.

31. A communication apparatus, wherein the apparatus comprises a processor, the processor is coupled to a memory, and the memory stores instructions; and when the instructions are run by the processor,

**EP 4 429 124 A1**

the processor is enabled to perform the method according to any one of claims 1 to 7; or
the processor is enabled to perform the method according to any one of claims 8 to 15.

32. A communication apparatus, wherein the apparatus comprises a logic circuit, and the logic circuit is coupled to an input/output interface, and configured to transmit data through the input/output interface, to perform the method according to any one of claims 1 to 7, or perform the method according to any one of claims 8 to 15.

33. A computer-readable storage medium, wherein the computer-readable storage medium is configured to store a computer program; and when the computer program is run on a computer, the computer is enabled to perform the method according to any one of claims 1 to 7, or the computer is enabled to perform the method according to any one of claims 8 to 15.

34. A computer program product, wherein the computer program product comprises computer program code; and when the computer program code is run, the method according to any one of claims 1 to 7 or the method according to any one of claims 8 to 15 is implemented.

35. A communication system, wherein the communication system comprises a relay device and a network device, the relay device is configured to perform the method according to any one of claims 1 to 7, and the network device is configured to perform the method according to any one of claims 8 to 15.

Network
device 101          (a)          Terminal
device 102

Network
device 101          (b)          Terminal
device 102

FIG. 1

Network
device 101

Relay
device 103

Terminal
device 102

FIG. 2

300

```
Terminal                    Relay                          Network
device                      device                         device
   |                          |                              |
   |                          |—— S301: First information ——→|
   |                          |                              |
   |                          |←— S302: First configuration —|
   |                          |         information          |
   |                          |                              |
   |                          |←- - S303: Second - - - - - - -|
   |                          |   configuration information   |
   |                          |                              |
   |←— S311: First signal ——— |←——— S310: First signal ———— |
   |  (at least one first beam)|                              |
   |                          |                              |
[S312: Channel               |                              |
 measurement]                |                              |
   |                          |                              |
   |—— S313: Measurement result —→|— S314: Measurement result —→|
   |                          |                              |
   |                          |←— S320: Second information ——|
   |                          |                              |
   |←— S331: Second signal ——|←——— S330: Second signal ——— |
   |  (at least one second beam)|  (at least one second beam)|
   |                          |                              |
```

FIG. 3

(a)

(b)

FIG. 4

| A | B | C | ... |
|---|---|---|-----|

→ Coverage range

(a)

| a0 | a1 | a2 | ... | b0 | b1 | b2 | ... | c0 | c1 | c2 | ... | ... | ... | ... | ... |
|----|----|----|-----|----|----|----|-----|----|----|----|-----|-----|-----|-----|-----|

→ Coverage range

(b)

FIG. 5

→ Beam

| A | B | C | ... |
|---|---|---|-----|

Correspond to

| Signal 0 | Signal 1 | Signal 2 | ... | | Signal 0 | Signal 1 | ... |

|←——— Periodicity T ———→|

→ Time

FIG. 6

| B | ... |
|---|-----|

| A | C | ... |
|---|---|-----|

|← O →|

→ Coverage range

(a)

| b0 | b1 | b2 | ... | d0 | d1 | d2 | ... |
|----|----|----|-----|----|----|----|-----|

| a0 | a1 | a2 | ... | c0 | c1 | c2 | ... |
|----|----|----|-----|----|----|----|-----|

|←O→|

→ Coverage range

(b)

FIG. 7

Coverage range →

| A | B | ... |

| a0 | a1 | a2 |   | b0 | b1 | b2 |

(a)

A0 —
| a0 |
| a1 |
| a2 |
| a3 |

(b)

**FIG. 8**

→ Coverage range

| a0 | a1 | a2 |

| b0 | b1 | b2 | b3 | b4 | b5 |

| c0 | c1 | c2 | c3 | c4 | c5 | c6 | c7 | c8 | c9 | c10 | c11 |

| d0 | d1 | d2 | d3 | d4 | d5 | d6 | d7 | d8 | d9 | d10 | d11 |

**FIG. 9**

**FIG. 10**

RSRP

a0    b0    a1    a2    Angle

FIG. 11

400

| Terminal device | | Relay device | | Network device |
|---|---|---|---|---|
| | | | S401: First information | |
| | | | S402: First configuration information | |
| | | | S403: Second configuration information | |
| | S410: Third signal (at least one first beam) | | S411: Third signal | |
| | | | S412: Channel measurement | |
| | | | S420: Second information | |
| | S431: Fourth signal (at least one second beam) | | S430: Fourth signal (at least one second beam) | |

FIG. 12

FIG. 13

FIG. 14

700

Transceiver unit 710

Processing unit 720

FIG. 15

800

Transceiver unit 810

Processing unit 820

FIG. 16

900

Processor 910

Transceiver 930

Memory 920

FIG. 17

1000

| Processor 1010 | Transceiver 1030 |
|---|---|
| Memory 1020 | |

FIG. 18

1100

Logic circuit 1110

Input/Output interface 1120

FIG. 19

## INTERNATIONAL SEARCH REPORT

| | International application No. |
| --- | --- |
| | **PCT/CN2023/072251** |

**A. CLASSIFICATION OF SUBJECT MATTER**

H04B7/06(2006.01)i;H04B7/0408(2017.01)i;H04B7/0426(2017.01)i

According to International Patent Classification (IPC) or to both national classification and IPC

**B. FIELDS SEARCHED**

Minimum documentation searched (classification system followed by classification symbols)

IPC： H04B

Documentation searched other than minimum documentation to the extent that such documents are included in the fields searched

Electronic data base consulted during the international search (name of data base and, where practicable, search terms used)

3GPP, CNTXT, CNKI, ENTXTC, VEN: 波束管理, 测量, 回程, 回传, 接入, 直放站, 中继, 中间设备, access, backhaul, beamforming, relay, repeater, beam management, smart repeater

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114553269 A (HUAWEI TECHNOLOGIES CO., LTD.) 27 May 2022 (2022-05-27) description, paragraphs [0005]-[0302] | 1-35 |
| A | CN 110418412 A (HUAWEI TECHNOLOGIES CO., LTD.) 05 November 2019 (2019-11-05) description, paragraphs [0006]-[0050] | 1-35 |
| A | CN 111201721 A (QUALCOMM INC.) 26 May 2020 (2020-05-26) entire document | 1-35 |
| A | CN 113905394 A (CHINA ACADEMY OF INFORMATION AND COMMUNICATIONS TECHNOLOGY) 07 January 2022 (2022-01-07) entire document | 1-35 |
| A | US 2021051679 A1 (QUALCOMM INC.) 18 February 2021 (2021-02-18) entire document | 1-35 |
| A | MODERATOR (QUALCOMM INCORPORATED). "Email Discussion Summary for [100-e] [308] NR_Repeater_General" *3GPP TSG-RAN WG4 Meeting # 100-e R4-2115599*, 21 August 2021 (2021-08-21), entire document | 1-35 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 April 2023** | **28 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/072251**

| Patent document cited in search report | | | Publication date (day/month/year) | Patent family member(s) | | | Publication date (day/month/year) |
|---|---|---|---|---|---|---|---|
| CN | 114553269 | A | 27 May 2022 | None | | | |
| CN | 110418412 | A | 05 November 2019 | WO | 2019206168 | A1 | 31 October 2019 |
| CN | 111201721 | A | 26 May 2020 | WO | 2019074761 | A1 | 18 April 2019 |
| | | | | US | 2019116605 | A1 | 18 April 2019 |
| | | | | US | 10986644 | B2 | 20 April 2021 |
| | | | | EP | 3695521 | A1 | 19 August 2020 |
| CN | 113905394 | A | 07 January 2022 | None | | | |
| US | 2021051679 | A1 | 18 February 2021 | EP | 4014356 | A1 | 22 June 2022 |
| | | | | US | 11330603 | B2 | 10 May 2022 |
| | | | | WO | 2021030446 | A1 | 18 February 2021 |

Form PCT/ISA/210 (patent family annex) (July 2022)

**EP 4 429 124 A1**

## REFERENCES CITED IN THE DESCRIPTION

**Patent documents cited in the description**

- CN 202210109121